# EUROPEAN PATENT APPLICATION

(11) **EP 4 040 708 A1**
(43) Date of publication of application: **10.08.2022**
(21) Application number: 22154165.9
(22) Date of filing: 31.01.2022
(51) Int. Cl.: H04L 5/00, H04L 27/26, H04W 72/00

(54) **SIGNALING FOR UL TB PPDU WITH DISTRIBUTED-TONE RESOURCE UNITS IN 6GHZ LOW-POWER INDOOR SYSTEMS**

(30) Priority: 09.02.2021 US 202163147247 P; 23.08.2021 US 202163235826 P; 05.11.2021 US 202163275976 P; 26.01.2022 US 202217585510
(71) Applicant: MediaTek Singapore Pte. Ltd., Singapore 138628 (SG)
(72) Inventor: HU, Shengquan, San Jose, 95134 (US); LIU, Jianhan, San Jose, 95134 (US); PARE, Jr., Thomas Edward, San Jose, 95134 (US)
(74) Representative: Hoefer & Partner Patentanwälte mbB

(57) **Abstract**

Techniques pertaining to signaling for uplink, UL, transport block, TB, physical-layer protocol data unit, PPDU, with distributed-tone resource unit, dRUs, in 6GHz low-power indoor, LPI, systems are described. A station, STA, receives a trigger frame (2710) and, in response to the trigger frame signaling an indication of a RU type and that a dRU operation is enabled, the STA generates and transmits a PPDU with a dRU (2720).

## Description

### CROSS REFERENCE TO RELATED PATENT APPLICATION

The present disclosure is part of a non-provisional patent application claiming the priority benefit of U.S. Provisional Patent Application Nos. 63/147,247, 63/235,826 and 63/275,976, filed 09 February 2021, 23 August 2021 and 05 November 2021, respectively, the contents of which being incorporated by reference in their entirety.

### TECHNICAL FIELD

The present disclosure is generally related to wireless communications and, more particularly, to signaling for uplink (UL) trigger-based (TB) physical-layer protocol data unit (PPDU) with distributed-tone resource unit (dRUs) in 6GHz low-power indoor (LPI) systems.

### BACKGROUND

Unless otherwise indicated herein, approaches described in this section are not prior art to the claims listed below and are not admitted as prior art by inclusion in this section.

In next-generation wireless communications, such as the 6GHz LPI systems in accordance with the Institute of Electrical and Electronics Engineers (IEEE) standards, restrictions on power spectral density (PSD) tends to limit the coverage range, for UL TB PPDU in particular. One approach to improving service coverage is to boost the transmit (Tx) power with the use of dRUs by distributing the tones over a wider bandwidth (BW). As there are several different dRU operation modes, how to enable the different dRU operation modes by different signaling methods needs to be defined. Therefore, there is a need for a solution for signaling for UL TB PPDU with dRUs in 6GHz LPI systems.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to signaling for UL TB PPDU with dRUs in 6GHz LPI systems. Under various proposed schemes in accordance with the present disclosure, several signaling methods may be utilized to enable different dRU operation modes. Such signaling methods include: (1) a signaling/indication method for tone distribution over an entire PPDU bandwidth of 20/40/80MHz; (2) a signaling/indication method for per-80MHz frequency subblock tone distribution in a wide bandwidth such as 160/320MHz; (3) a signaling/indication method for hybrid operation of dRUs and regular RUs (rRUs) on different 80MHz frequency subblocks in a wide bandwidth of 160MHz and 320MHz; and (4) a signaling/indication method for puncture mode operation of dRU on 20MHz and 40MHz frequency subblocks in an 80MHz bandwidth or in 80MHz frequency subblocks of wider BW160/320MHz. Methods and an apparatus according to the invention are defined in the independent claims. The dependent claims define preferred embodiments thereof.

In one aspect, a method may involve receiving a trigger frame. The method may also involve transmitting a PPDU with a dRU in response to the trigger frame signaling an indication of a RU type and that a dRU operation is enabled.

In another aspect, a method may involve transmitting a trigger frame. The method may also involve receiving a PPDU with a dRU in response to the trigger frame signaling an indication of a RU type and that a dRU operation is enabled.

In yet another aspect, an apparatus may include a transceiver configured to communicate wirelessly and a processor coupled to the transceiver. The processor may receive, via the transceiver, a trigger frame. In response to the trigger frame signaling an indication of a RU type and that a dRU operation is enabled, the processor may transmit, via the transceiver, a PPDU with a dRU.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial loT (IIoT) and narrowband loT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example design under the second proposed scheme in accordance with the present disclosure.
FIG. 3 is a diagram of an example design under the second proposed scheme in accordance with the present disclosure.
FIG. 4 is a diagram of an example design under the second proposed scheme in accordance with the present disclosure.
FIG. 5A and FIG. 5B is each a diagram of a respective portion of an example design under the second proposed scheme in accordance with the present disclosure.
FIG. 6 is a diagram of an example design under the second proposed scheme in accordance with the present disclosure.
FIG. 7 is a diagram of an example scenario under a proposed scheme in accordance with the present disclosure.
FIG. 8 is a diagram of an example scenario under a proposed scheme in accordance with the present disclosure.
FIG. 9 is a diagram of an example scenario under a proposed scheme in accordance with the present disclosure.
FIG. 10 is a diagram of an example scenario under a proposed scheme in accordance with the present disclosure.
FIG. 11 is a diagram of an example scenario under a proposed scheme in accordance with the present disclosure.
FIG. 12 is a diagram of an example scenario under a proposed scheme in accordance with the present disclosure.
FIG. 13 is a diagram of an example scenario under a proposed scheme in accordance with the present disclosure.
FIG. 14 is a diagram of an example design under the second proposed scheme in accordance with the present disclosure.
FIG. 15 is a diagram of an example design under the second proposed scheme in accordance with the present disclosure.
FIG. 16 is a diagram of an example scenario under a proposed scheme in accordance with the present disclosure.
FIG. 17 is a diagram of an example design under the second proposed scheme in accordance with the present disclosure.
FIG. 18 is a diagram of an example design under the second proposed scheme in accordance with the present disclosure.
FIG. 19 is a diagram of an example design under the second proposed scheme in accordance with the present disclosure.
FIG. 20 is a diagram of an example design under the second proposed scheme in accordance with the present disclosure.
FIG. 21 is a diagram of an example scenario under a proposed scheme in accordance with the present disclosure.
FIG. 22 is a diagram of an example design under the second proposed scheme in accordance with the present disclosure.
FIG. 23 is a diagram of an example scenario under a proposed scheme in accordance with the present disclosure.
FIG. 24 is a diagram of an example scenario under a proposed scheme in accordance with the present disclosure.
FIG. 25 is a diagram of an example scenario under a proposed scheme in accordance with the present disclosure.
FIG. 26 is a block diagram of an example communication system in accordance with an implementation of the present disclosure.
FIG. 27 is a flowchart of an example process in accordance with an implementation of the present disclosure.
FIG. 28 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to signaling for UL TB PPDU with dRUs in 6GHz LPI systems. According to the present disclosure, a number of possible solutions may be implemented separately or jointly. That is, although these possible solutions may be described below separately, two or more of these possible solutions may be implemented in one combination or another.

It is noteworthy that, in the present disclosure, a regular RU (rRU) refers to a RU with tones that are continuous (e.g., adjacent to one another) and not interleaved, interlaced or otherwise distributed. Moreover, a 26-tone regular RU may be interchangeably denoted as RU26 (or rRU26), a 52-tone regular RU may be interchangeably denoted as RU52 (or rRU52), a 106-tone regular RU may be interchangeably denoted as RU106 (or rRU106), a 242-tone regular RU may be interchangeably denoted as RU242 (or rRU242), and so on. Moreover, an aggregate (26+52)-tone regular multi-RU (MRU) may be interchangeably denoted as MRU78 (or rMRU78), an aggregate (26+106)-tone regular MRU may be interchangeably denoted as MRU132 (or rMRU132), and so on. Furthermore, in the present disclosure, a 26-tone distributed-tone RU may be interchangeably denoted as dRU26, a 52-tone distributed-tone RU may be interchangeably denoted as dRU52, a 106-tone distributed-tone RU may be interchangeably denoted as dRU106, a 242-tone distributed-tone RU may be interchangeably denoted as dRU242, and so on. Additionally, an aggregate (26+52)-tone distributed-tone MRU may be interchangeably denoted as dMRU78, an aggregate (26+106)-tone distributed-tone MRU may be interchangeably denoted as dMRU132, and so on.

Since the above examples are merely illustrative examples and not an exhaustive listing of all possibilities, the same applies to regular RUs, distributed-tone RUs, MRUs, and distributed-tone MRUs of different sizes (or different number of tones). It is also noteworthy that, in the present disclosure, a bandwidth of 20MHz may be interchangeably denoted as BW20, a bandwidth of 40MHz may be interchangeably denoted as BW40, a bandwidth of 80MHz may be interchangeably denoted as BW80, a bandwidth of 160MHz may be interchangeably denoted as BW160, a bandwidth of 240MHz may be interchangeably denoted as BW240, and a bandwidth of 320MHz may be interchangeably denoted as BW320. It is further noteworthy that, in the present disclosure, a 26-tone interleaved-tone (or interlaced-tone) RU may be interchangeably denoted as iRU26 as well as dRU26 (26-tone distributed-tone RU), a 52-tone interleaved-tone (or interlaced-tone) RU may be interchangeably denoted as iRU52 as well as dRU52 (52-tone distributed-tone RU), a 106-tone interleaved-tone (or interlaced-tone) RU may be interchangeably denoted as iRU106 as well as dRU106 (106-tone distributed-tone RU), a 242-tone interleaved-tone (or interlaced-tone) RU may be interchangeably denoted as iRU242 as well as dRU242 (242-tone distributed-tone RU), and a 484-tone interleaved-tone (or interlaced-tone) RU may be interchangeably denoted as iRU484 as well as dRU484 (484-tone distributed-tone RU). It is also noteworthy that, in the present disclosure, the notion of "RU type = dRU" is equivalent to dRU enabled, and the notion of "RU type = rRU" is equivalent to dRU disabled.

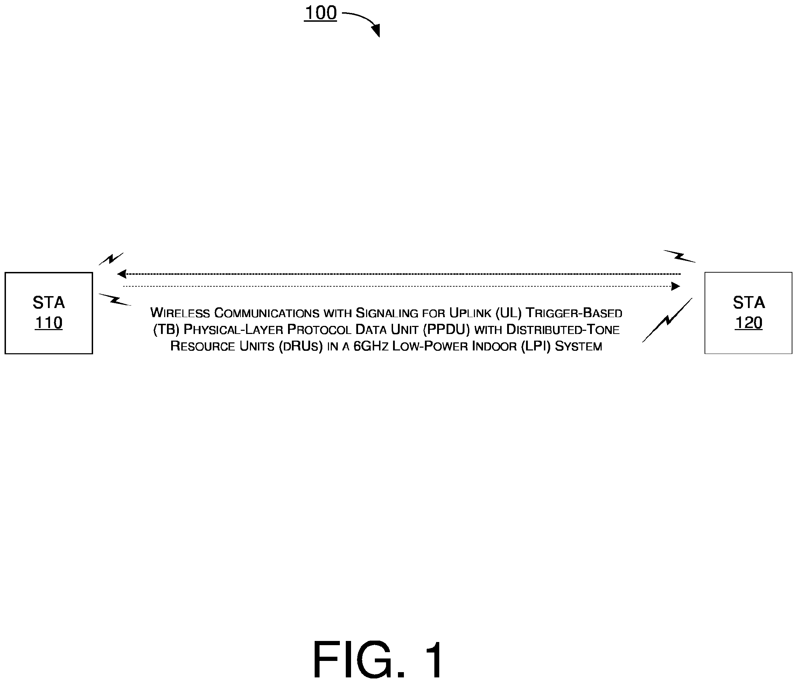

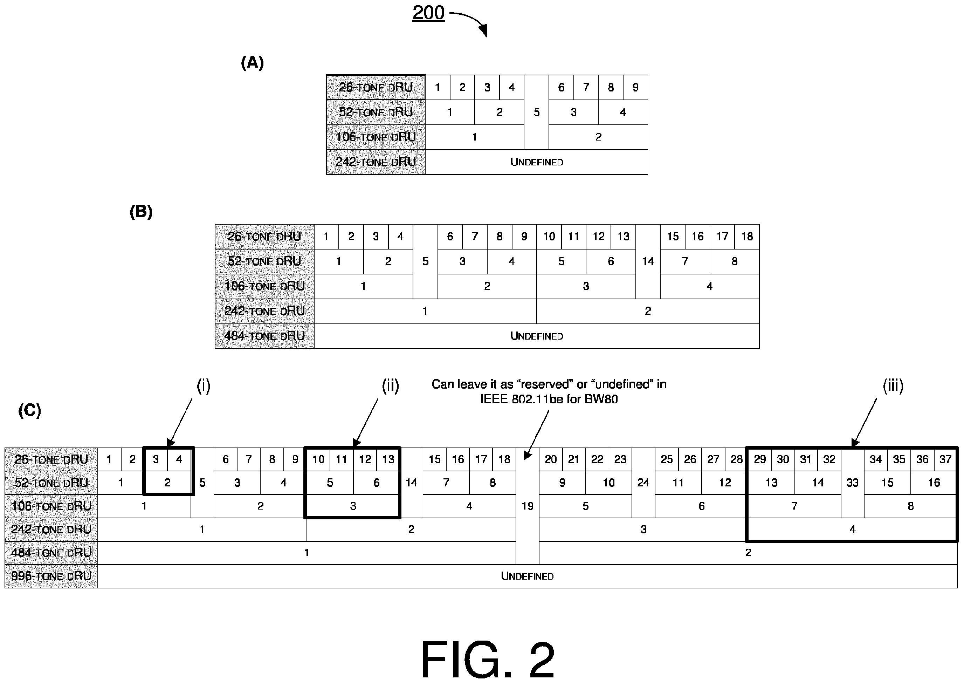

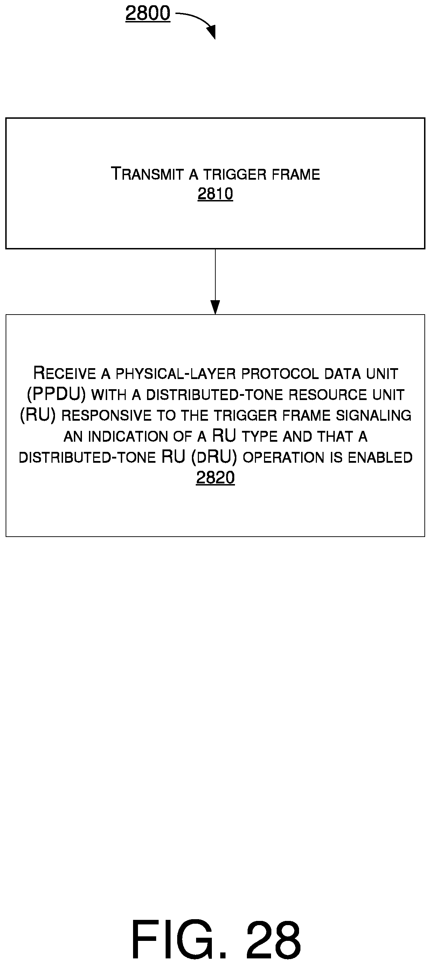

FIG. 1 illustrates an example network environment 100 in which various solutions and schemes in accordance with the present disclosure may be implemented. FIG. 2 ∼ FIG. 28 illustrate examples of implementation of various proposed schemes in network environment 100 in accordance with the present disclosure. The following description of various proposed schemes is provided with reference to FIG. 1 ∼ FIG. 28.

Referring to FIG. 1, network environment 100 may involve at least a station (STA) 110 communicating wirelessly with a STA 120. Each of STA 110 and STA 120 may be a non-access point (non-AP) STA or, alternatively, either of STA 110 and STA 120 may function as an access point (AP) STA. In some cases, STA 110 and STA 120 may be associated with a basic service set (BSS) in accordance with one or more IEEE 802.11 standards (e.g., IEEE 802.11 be and future-developed standards). Each of STA 110 and STA 120 may be configured to communicate with each other by utilizing the signaling for UL TB PPDU with dRUs in 6GHz LPI systems in accordance with various proposed schemes described below. That is, either or both of STA 110 and STA 120 may function as a "user" in the proposed schemes and examples described below.

FIG. 2 illustrates an example design 200 under a proposed scheme in accordance with the present disclosure. Design 200 shows an example of labels or indices for BW20, BW40 and BW80. Under the proposed scheme, 26-tone dRUs (dRU26) may be used as the basic "building block" to build dRUs of other sizes. For instance, a 52-tone dRU (dRU52) may be built from two 26-tone dRUs, a 106-tone dRU (dRU106) may be built from four 26-tone dRUs (or two 52-tone dRUs) with padding of two extra tones, and a 242-tone dRU (dRU242) may be built from nine 26-tone dRUs with padding of eight extra tones (or two 106-tone dRUs plus one 26-tone dRU with padding of four extra tones). Part (A) of FIG. 2 shows dRU index for BW20 under the proposed scheme. Part (B) of FIG. 2 shows dRU index for BW40 under the proposed scheme. Part (C) of Fig. 2 shows dRU index for BW80 under the proposed scheme.

With respect to the dRU index encircled in box (i) in part (C) of FIG. 2, based on the dRU hierarchical structure, the 52-tone dRU2 may be formed from two 26-tone dRUs, namely dRU3 and dRU4. Similar to the regular RU scheduling, in case the 52-tone dRU2 is assigned to one user, then the 26-tone dRU3 and dRU4 may not be scheduled to other users in order to avoid conflict. With respect to the dRU index encircled in box (ii) in part (C) of FIG. 2, based on the dRU hierarchical structure, the 106-tone dRU3 may be formed from four 26-tone dRUs, namely dRU10 ∼ dRU13 (or two 52-tone dRUs, namely dRU5 and dRU6), with padding of two extra tones. Similar to the regular RU scheduling, in case the 106-tone dRU3 is assigned to one user, then the 26-tone dRU10 ∼ dRU13 and 52-tone dRU5 and dRU6 may not be scheduled to other users in order to avoid conflict. With respect to the dRU index encircled in box (iii) in part (C) of FIG. 2, based on the dRU hierarchical structure, the 242-tone dRU4 may be formed from nine 26-tone dRUs, namely dRU29 ∼ dRU37, with padding of eight extra tones (or two 106-tone dRUs, namely dRU7 and dRU8, plus one 26-tone dRU such as dRU33, with padding of four extra tones). Similar to the regular RU scheduling, in case the 242-tone dRU4 is assigned to one user, then the 26-tone dRU29 ∼ dRU37 and 52-tone dRU13 ∼ dRU16 as well as the 106-tone dRU7 and dRU8 may not be scheduled to other users in order to avoid conflict.

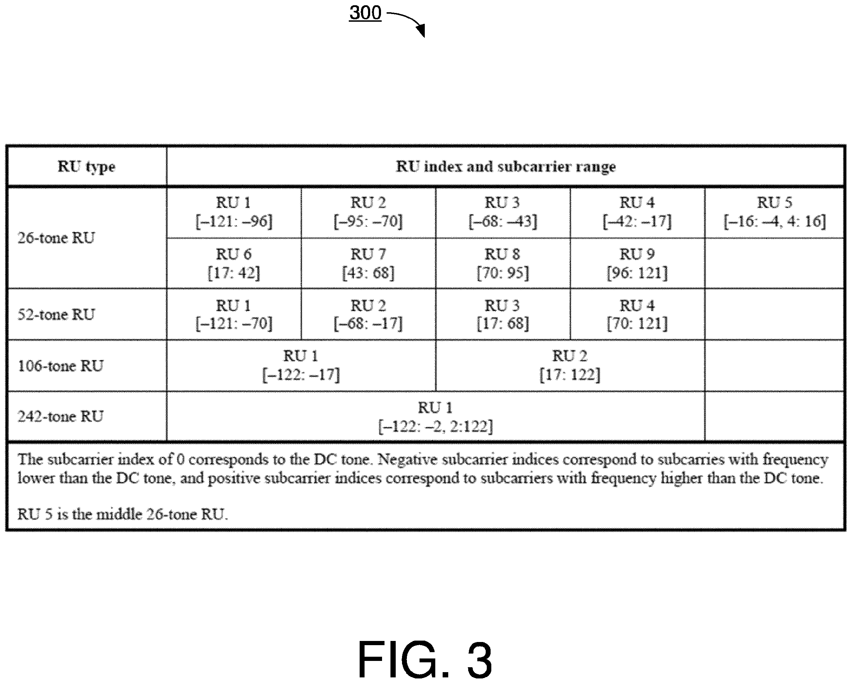

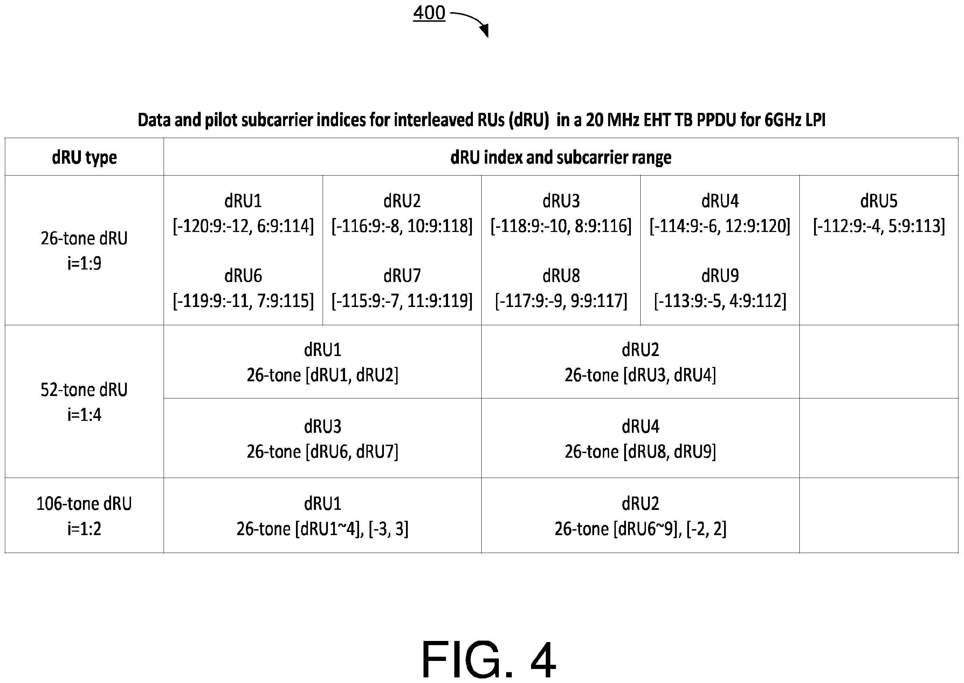

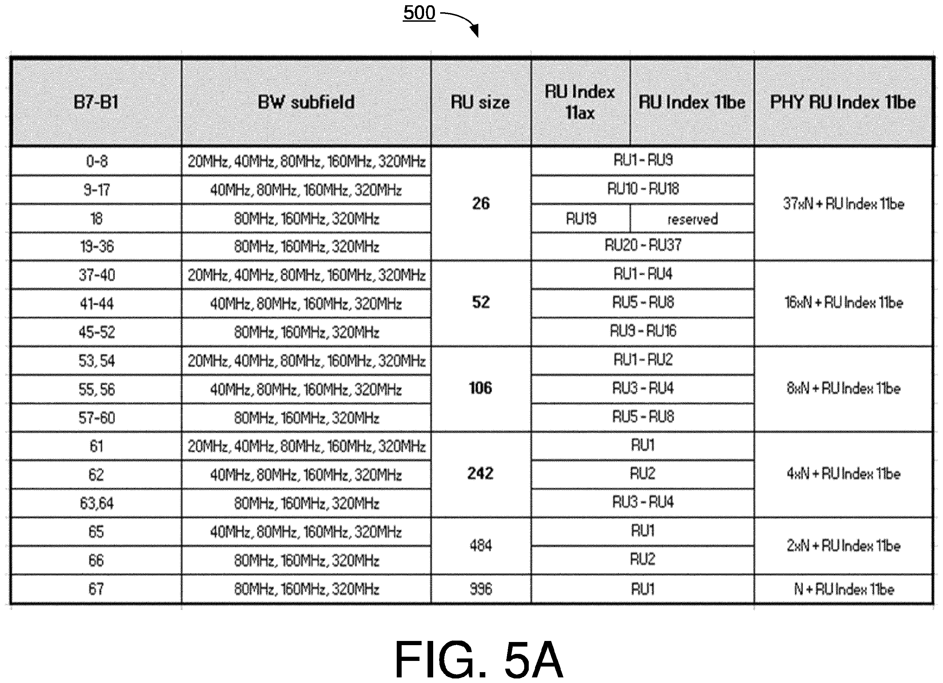

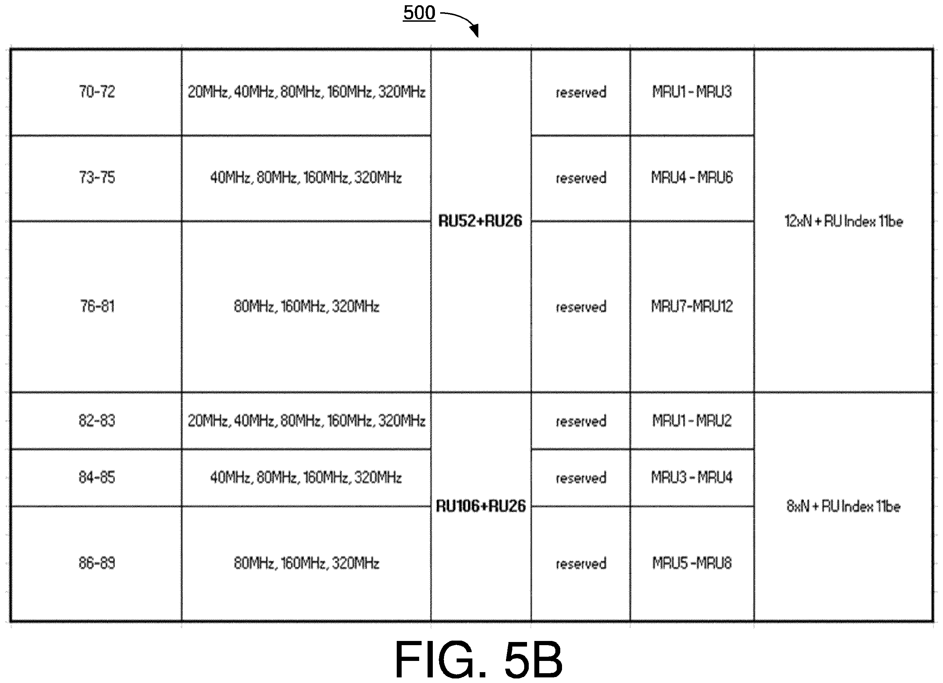

FIG. 3, FIG. 4, FIG. 5A and FIG. 5B illustrate example design 300, example design 400 and example design 500 under a proposed scheme in accordance with the present disclosure. Under the proposed scheme, the regular RU Allocation Subfield Table may be reused for dRU UL trigger frame signaling. In case that dRU transmission is enabled, the RU index in the table shown in FIG. 3 may be interpreted as dRU index. For example, referring to the table of regular RU index and subcarriers for BW20 shown in FIG. 3, with B7-B1 = 8 in FIG. 5A, if RU type = rRU (or "dRU enable = 0"), then it means regular 26-tone RU9. As another example, referring to the table of distributed-tone RU (dRU) index and subcarriers for BW20 shown in FIG. 4, if RU type = dRU (or "dRU enable = 1"), then B7-B1 = 8 in FIG. 5A may be interpreted to mean distributed 26-tone dRU9. Referring to an upper portion of a table under design 500 and shown in FIG. 5A, the same B7-B1 may be kept the same for distributed-tone RUs as for regular RUs. For instance, RU1 may be used for dRU1, RU2 may be used for dRU2, ... RU9 may be used for dRU9, and so on. Referring to a lower portion of the table under design 500 and shown in FIG. 5B, the same B7-B1 may be kept the same for distributed-tone MRUs as for regular MRUs. For instance, MRU1 may be used for dMRU1, MRU2 may be used for dMRU2, ... MRU8 may be used for dMRU8, and so on.

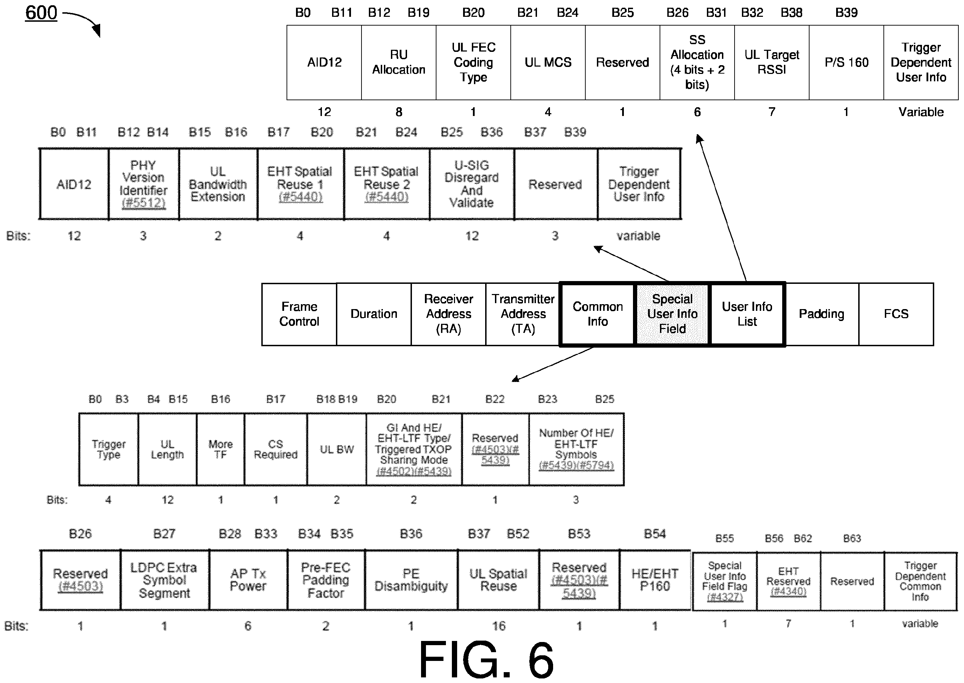

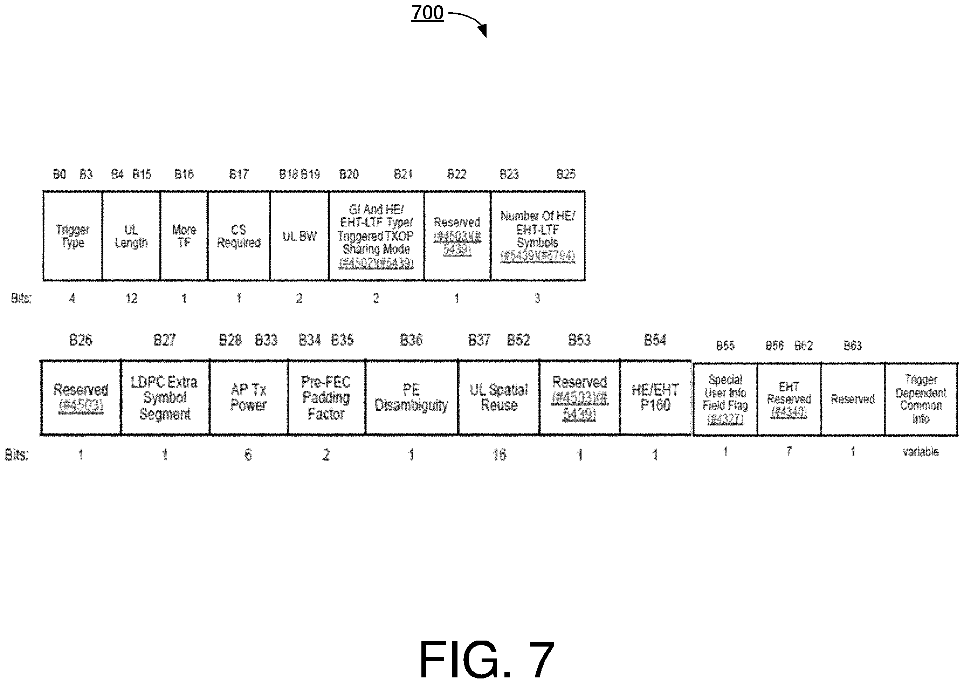

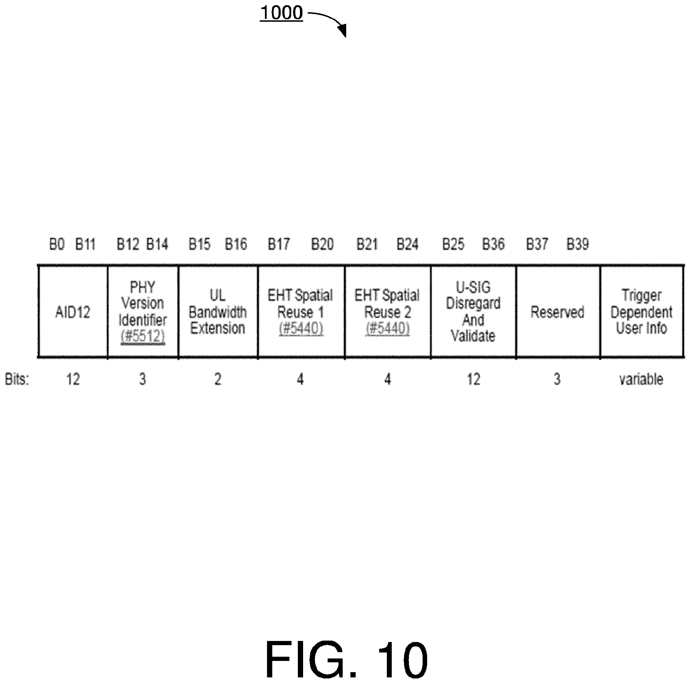

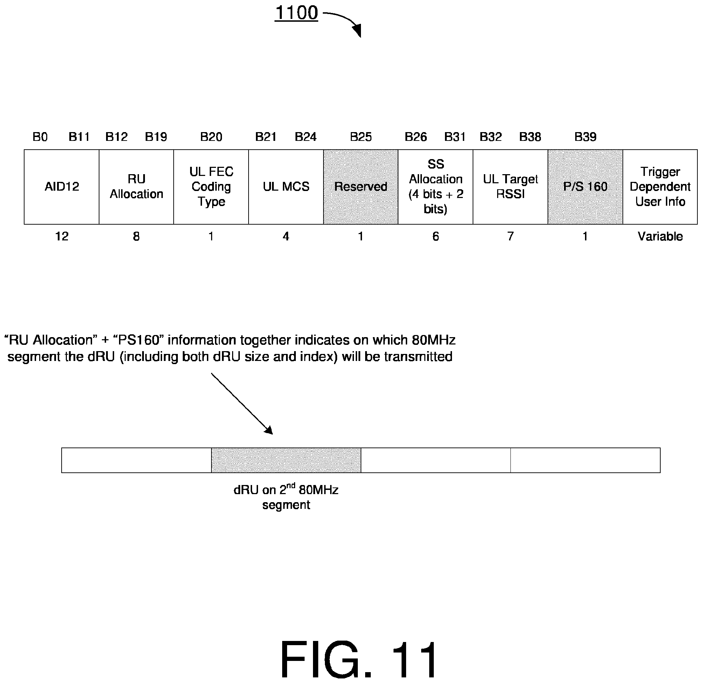

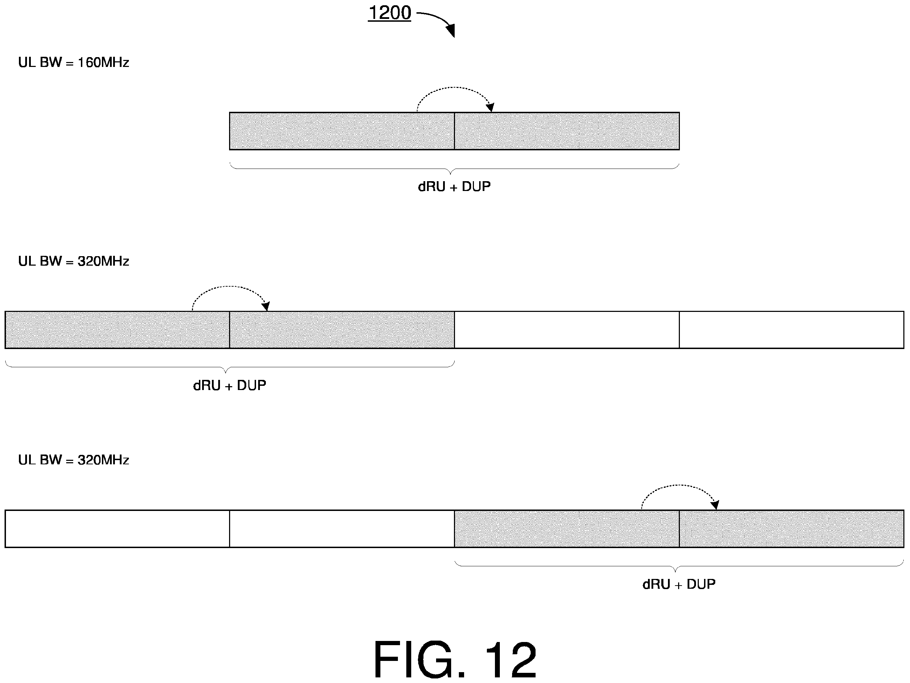

FIG. 6 illustrates an example design 600 under a proposed scheme in accordance with the present disclosure. Design 600 shows an example trigger frame format for dRU signaling in IEEE 802.11 be. There may be several options for dRU signaling in a trigger frame. In a first option (Option 1), a RU type (or dRU enable/disable) indication may be signaled in the Common Information field (denoted as "Common Info" in FIG. 6). FIG. 7, FIG. 8 and FIG. 9 illustrate example scenario 700, example scenario 800 and example scenario 900 under Option 1 of the proposed scheme. In a second option (Option 2), the RU type (or dRU enable/disable) indication may be signaled in the Special User Information field (denoted as "Special User Info Field" in FIG. 6). FIG. 10 illustrates an example scenario 1000 under Option 2 of the proposed scheme. In a third option (Option 3), the RU type (or dRU enable/disable) indication may be signaled in the User Information field (denoted as "User Info List" in FIG. 6). FIG. 11 and FIG. 12 illustrate example scenario 1100 and example scenario 1200 under Option 3 of the proposed scheme.

FIG. 7 illustrates an example scenario 700 of dRU signaling in a Common Information field of a trigger frame under Option 1. Referring to FIG. 7, in one approach (Option 1a), the "Reserved" bit of bit B22 or bit B26 or bit B53 or bit B63 may be used for indication of RU type (or dRU enable/disable) over an entire bandwidth in case the trigger frame is used for an EHT PPDU transmission. For instance, a value of "0" in B53 may indicate a regular RU transmission (i.e., RU type = rRU) of a EHT TB PPDU, and a value of "1" in B53 may indicate a dRU transmission (i.e., RU type = dRU) of an EHT TB PPDU. Alternatively, or additionally, in another approach (Option 1b), one of the UL HE signal reserved bits ("UL HE-SIG-A2 Reserved") may be used to indicate RU type (or dRU enable/disable) for an entire bandwidth. Alternatively, a bitmap (e.g., up to four bits) may be used to indicate per-80MHz frequency subblock dRU/rRU operations (or dRU + duplication (DUP) + dual-carrier modulation (DCM) operations). Alternatively, or additionally, one bit (e.g., B63 reserved bit or another bit) may be used to indicate a distribution bandwidth (or a size of a window of tone distribution) when BW ≥ 160MHz. For instance, for BW = 160MHz or 320MHz, a value of "0" in B63 may indicate the size of the window to be 80MHz, and a value of "1" in B63 may indicate the size of the window to be 160MHz or greater.

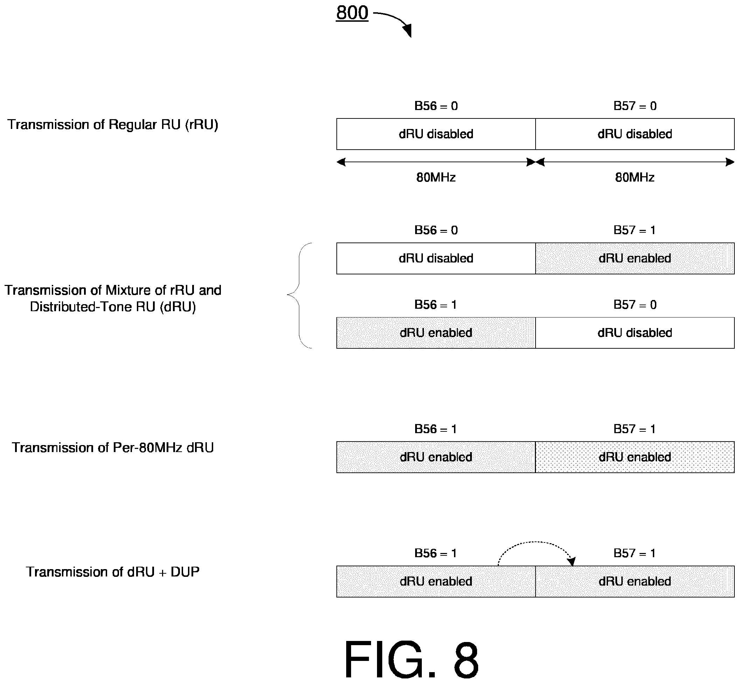

FIG. 8 illustrates an example scenario 800 of dRU signaling in a Common Information field of a trigger frame under Option 1. Referring to FIG. 8, in case of UL BW ≤ 80MHz, then bit B56 (or another bit) may be used to indicate dRU enabled or disabled over the entire bandwidth. Moreover, in case of UL BW = 160MHz, then bits B56-B57 (or other two bits) may be used to indicate the examples shown in FIG. 8 for transmission of a rRU, transmission of a mixture of rRU and dRU, transmission of per-80MHz segment dRU, and transmission of dRU plus duplication (DUP). In scenario 800, "dRU disabled" refers to regular RU (rRU) transmission. Regarding transmission of dRU plus DUP (dRU+DUP), it may be assumed that: (1) DUP is indicated by an EHT modulation coding scheme (e.g., EHT-MCS14) in the User Information field, (2) the DUP is only for bandwidth over BW160, and (3) the same dRU index is transmitted over two 80MHz frequency subblocks. Additionally, in case the size of window of tone distribution is 80MHz, then the DUP may be over BW160. Moreover, the dRU+DUP mode may be viable for certain situations such as, for example: (1) all STAs transmit with dRU+DUP, and (2) some STAs transmit just dRU per-80MHz segment while some STAs transmit with dRU+DUP.

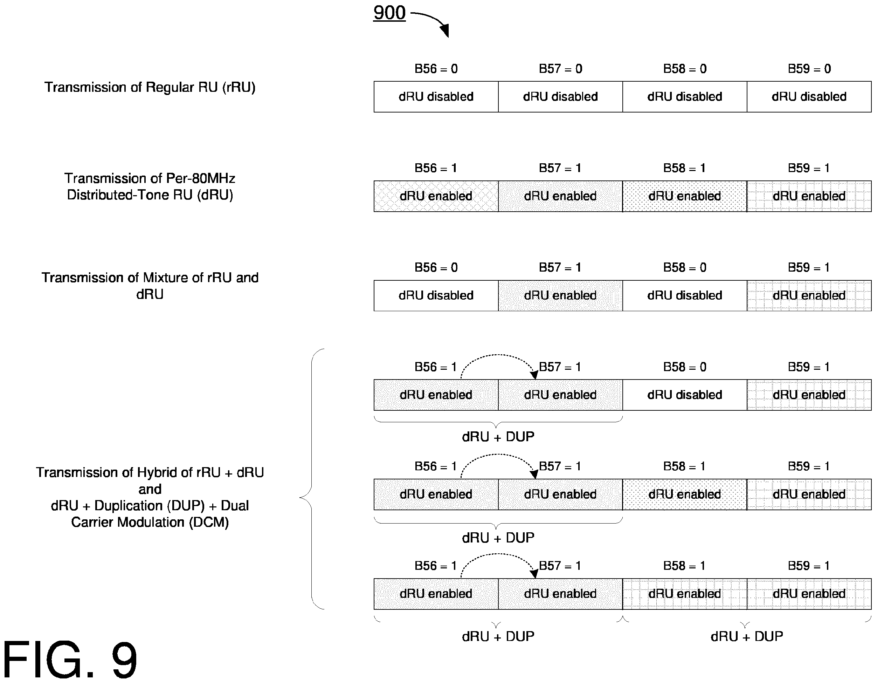

FIG. 9 illustrates an example scenario 900 of dRU signaling in a Common Information field of a trigger frame under Option 1. Referring to FIG. 9, in case of UL BW = 320MHz, then bits B56-B59 (or other four bits) may be used to indicate the examples shown in FIG. 9 for transmission of a rRU, transmission of per-80MHz segment dRU, transmission of a mixture of rRU and dRU, and transmission of a hybrid of rRU and dRU+DUP (and optionally plus DCM). Regarding transmission in the hybrid mode, in case the size of window of tone distribution is 80MHz, then the DUP may be over BW160, and in case the size of window of tone distribution is 160MHz, then the DUP may be over BW320. Regarding transmission in the hybrid mode, it may be assumed that: (1) DUP is indicated by an EHT-MCS (e.g., EHT-MCS14) in the User Information field, (2) the DUP is only for bandwidth over BW160, and (3) the same dRU index is transmitted over two 80MHz segments, and (4) DUP is only operated over two contiguous 80MHz segments in either the lower 160MHz or the upper 160MHz.

FIG. 10 illustrates an example scenario 1000 of dRU signaling in a Special User Information field of a trigger frame under Option 2. Referring to FIG. 10, one bit (e.g., one bit in the Reserved field or another bit in U-SIG Disregard field) may be used to indicate a size of a window of tone distribution when BW ≥ 160MHz. For instance, for BW = 160MHz or 320MHz, a value of "0" in "Reserved bit" or "U-SIG Disregard bit" may indicate the size of the window to be 80MHz, and a value of "1" in "Reserved bit" or "U-SIG Disregard bit" may indicate the size of the window to be 160MHz or greater. Alternatively, or additionally, one of the universal signaling (U-SIG) Disregard bits may be used to indicate dRU enabled or disabled for an entire bandwidth. Alternatively, a bitmap (e.g., up to four bits) may be used to indicate per-80MHz subblock dRU/rRU operations (or dRU + DUP + DCM operations). Definition of the bitmap may be the same as that under Option 1.

FIG. 11 illustrates an example scenario 1100 of dRU signaling in a User Information field of a trigger frame under Option 3. Referring to FIG. 11, one bit (e.g., one bit in the Reserved filed or another bit) may be used to indicate RU type (or dRU enabled or disabled) per user/STA. Information indicated in the RU Allocation field may be used for dRU allocation indication by reusing the IEEE 802.11 be RU Allocation Table. Information in the UL MCS field (e.g., EHT-MCS14 or other bits) may be used to indicate DUP + dRU + (DCM) in case that dRU transmission is enabled (or dRU type = dRU). It is noteworthy that, under Option 3, it may be assumed that dRU operations may be performed with a limited number of spatial streams (Nss). One or two bits of "SS Allocation" field may be used to indicate a size of a window of tone distribution when BW ≥ 80MHz. In Option 3, information in the fields of "RU Allocation" and "P/S160" (primary/secondary 160) may be kept the same as for rRUs and may together be used to indicate on which 80MHz segment the dRU (including both dRU size and index) may be transmitted.

FIG. 12 illustrates an example scenario 1200 of dRU signaling in a User Information field of a trigger frame under Option 3. Referring to FIG. 12, in case of UL BW = 160MHz and in case of EHT-MCS = 14 (or others) and dRU is enabled, then transmission with dRU + DUP + (DCM) over BW160 may be indicated. It may be assumed that, in case the size of the window of tone distribution is then the DUP may be over BW160. Moreover, in case of UL BW = 320MHz with P/S160 = 0 and in case of EHT-MCS = 14 (or others) and dRU is enabled, then transmission with dRU + DUP + (DCM) over a lower BW160 may be indicated. It is noteworthy that, in case the size of the window of tone distribution is 160MHz, then the DUP may be over BW320. Furthermore, in case of UL BW = 320MHz with P/S160 = 1 and in case of EHT-MCS = 14 (or others) and dRU is enabled, then transmission with dRU + DUP + (DCM) over an upper BW160 may be indicated.

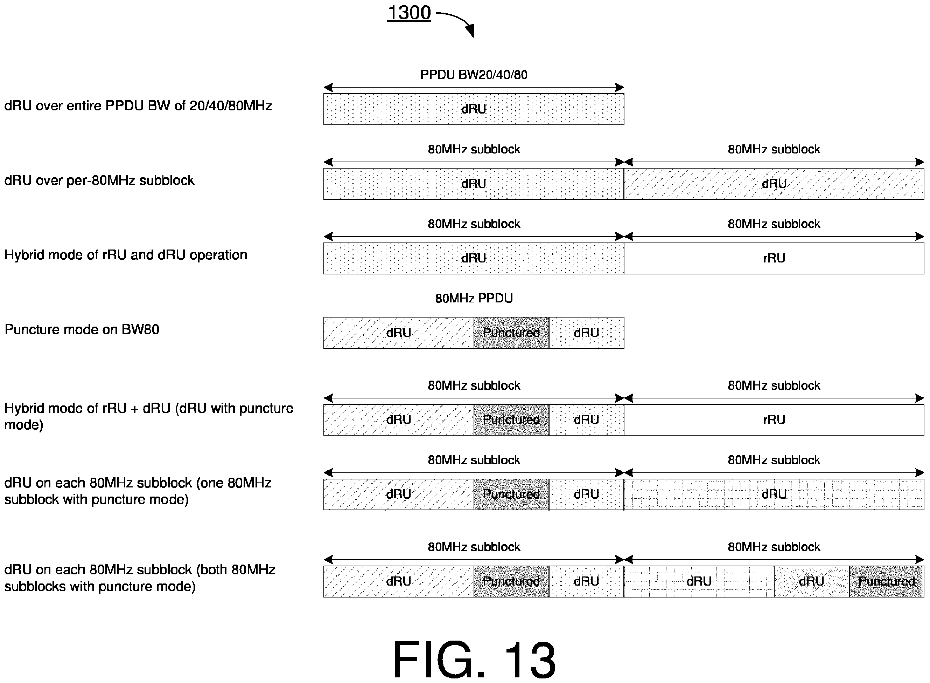

FIG. 13 illustrates an example scenario 1300 of dRU operation modes under various proposed schemes in accordance with the present disclosure. Referring to FIG. 13, the various dRU operation modes may include the following: (1) dRU over an entire PPDU bandwidth of 20/40/80MHz; (2) dRU over per-80MHz frequency subblock; (3) hybrid mode of rRU and dRU operation; (4) puncture mode on BW80; (5) hybrid mode of rRU + dRU and dRU with puncture mode; (6) dRU on each 80MHz subblock, with one 80MHz subblock operating with puncture mode; and (7) dRU on each 80MHz subblock, with both 80MHz subblocks operating with puncture mode.

It is noteworthy that, for the different dRU operation modes/scenarios, certain information needs to be indicated. Such information includes, for example and without limitations, RU type (e.g., dRU or rRU), dRU distribution bandwidth (e.g., 20MHz, 40MHz or 80MHz), and dRU allocation (e.g., dRU index and dRU size such as dRU26/, dRU52, dRU106, dRU242 and/or dRU484). For dRU index, a structure similar to that of IEEE 802.11 be RU Allocation Subfield Table may be reused, with the encoding of B0∼B7 of RU Allocation subfield and P/S160 subfield kept the same as for rRU, by simply replacing rRU by dRU. Since dRU supports up to 484-tone distribution and a distribution bandwidth up to 80MHz, the dRU Allocation subfield table may be simplified for distribution bandwidth up to 80MHz. For dRU on frequency subblocks of a wide bandwidth such as 160MHz and 320MHz, P/S160 together with B0 of the RU Allocation subfield may indicate where the 80MHz subblock is located in the wide bandwidth of 160/320MHz (e.g., indication by the 80MHz subblock index N). Inside each 80MHz, there may be different mapping of dRU index to 20MHz and 40MHz subblock index M as defined in the present disclosure. For indications of RU type and dRU distribution bandwidth, several signaling options may be utilized by using the Common Information field, Special User Information field, or the User Information field.

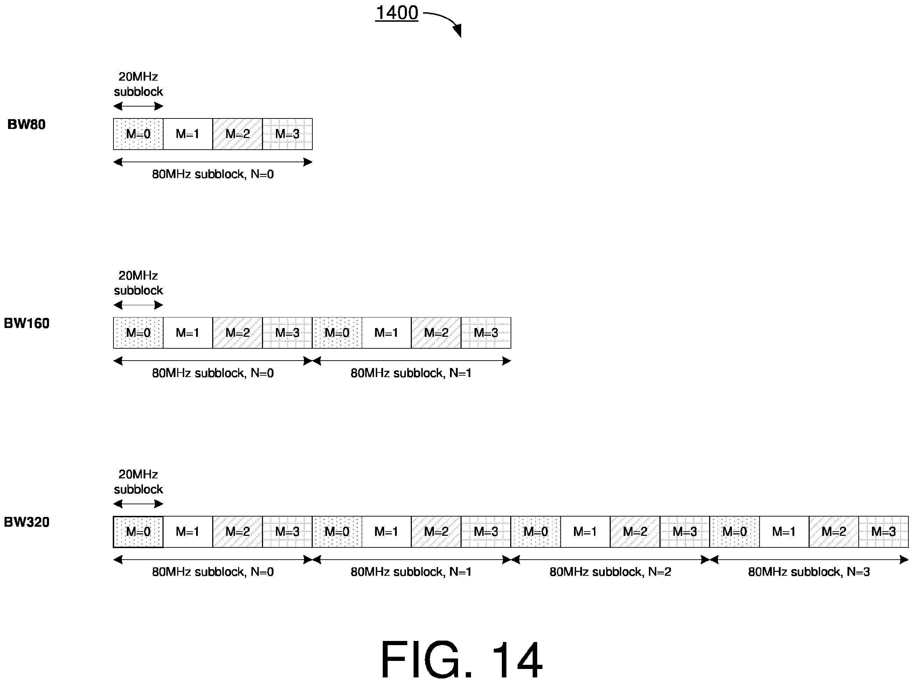

FIG. 14 illustrates an example design 1400 of 20MHz and 80MHz subblock index under a proposed scheme in accordance with the present disclosure. Referring to FIG. 14, for BW80, index (M) of the four 20MHz subblocks may range in 0 ∼ 3 (e.g., M = 0, 1, 2 or 3) and the index (N) of the one 80MHz subblock may be 0. For BW160, M of the four 20MHz subblocks in each 80MHz subblock may range in 0 ∼ 3 (e.g., M = 0, 1, 2 or 3) and N of the two 80MHz subblocks may range in 0 ∼ 1 (e.g., N = 0 or 1). For BW320, M of the four 20MHz subblocks in each 80MHz subblock may range in 0 ∼ 3 (e.g., M = 0, 1, 2 or 3) and N of the four 80MHz subblocks may range in 0 ∼ 3 (e.g., N = 0, 1, 2 or 3).

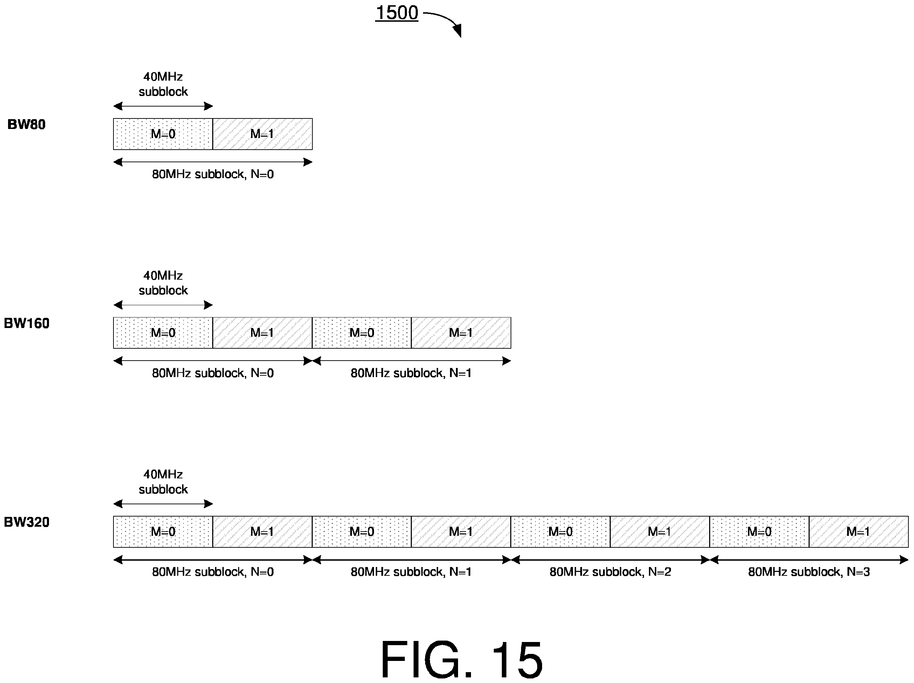

FIG. 15 illustrates an example design 1500 of 40MHz and 80MHz subblock index under a proposed scheme in accordance with the present disclosure. Referring to FIG. 15, for BW80, index (M) of the two 40MHz subblocks may range in 0 ∼ 1 (e.g., M = 0 or 1) and the index (N) of the one 80MHz subblock may be 0. For BW160, M of the two 40MHz subblocks in each 80MHz subblock may range in 0 ∼ 1 (e.g., M = 0 or 1) and N of the two 80MHz subblocks may range in 0 ∼ 1 (e.g., N = 0 or 1). For BW320, M of the two 40MHz subblocks in each 80MHz subblock may range in 0 ∼ 1 (e.g., M = 0 or 1) and N of the four 80MHz subblocks may range in 0 ∼ 3 (e.g., N = 0, 1, 2 or 3).

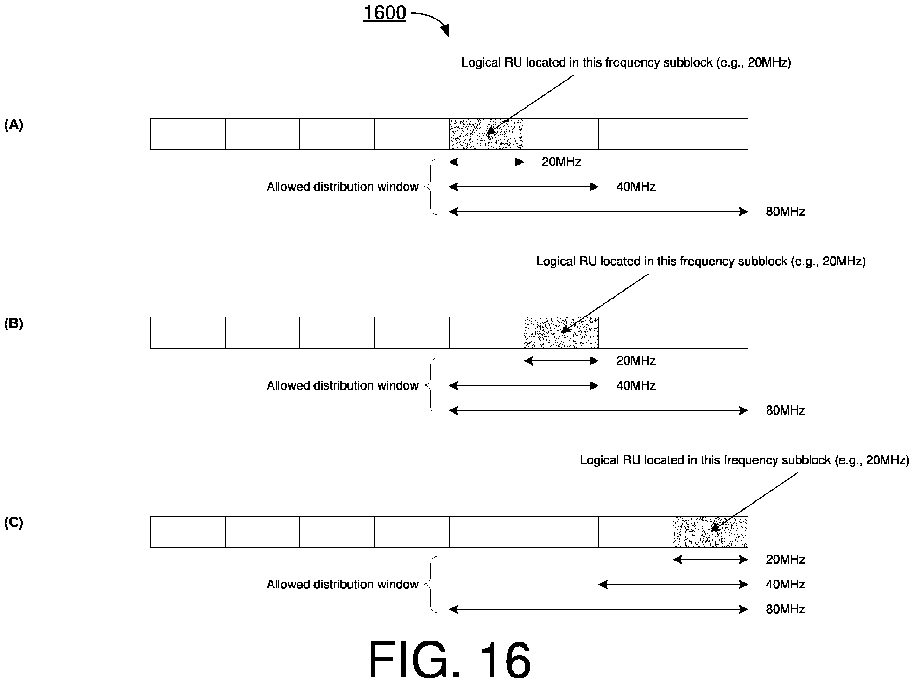

FIG. 16 illustrates an example scenario 1600 of dRU on frequency subblocks under a proposed scheme in accordance with the present disclosure. For a given frequency subblock size (e.g., 20MHz or 40MHz or 80MHz), each logical RU may have its own associated frequency subblock. Under the proposed scheme, distribution of tones of a given logical RU may be allowed over an associated frequency subblock of that logical RU. Referring to part (A) of FIG. 16, the logical RU may be located in the shaded frequency subblock (e.g., 20MHz) and, under the proposed scheme, tones may be distributed in the 20MHz or 40MHz or 80MHz associated with the shaded frequency subblock. Referring to part (B) of FIG. 16, the logical RU may be located in the shaded frequency subblock (e.g., 20MHz) and, under the proposed scheme, tones may be distributed in the 20MHz or 40MHz or 80MHz associated with the shaded frequency subblock. Referring to part (C) of FIG. 16, the logical RU may be located in the shaded frequency subblock (e.g., 20MHz) and, under the proposed scheme, tones may be distributed in the 20MHz or 40MHz or 80MHz associated with the shaded frequency subblock.

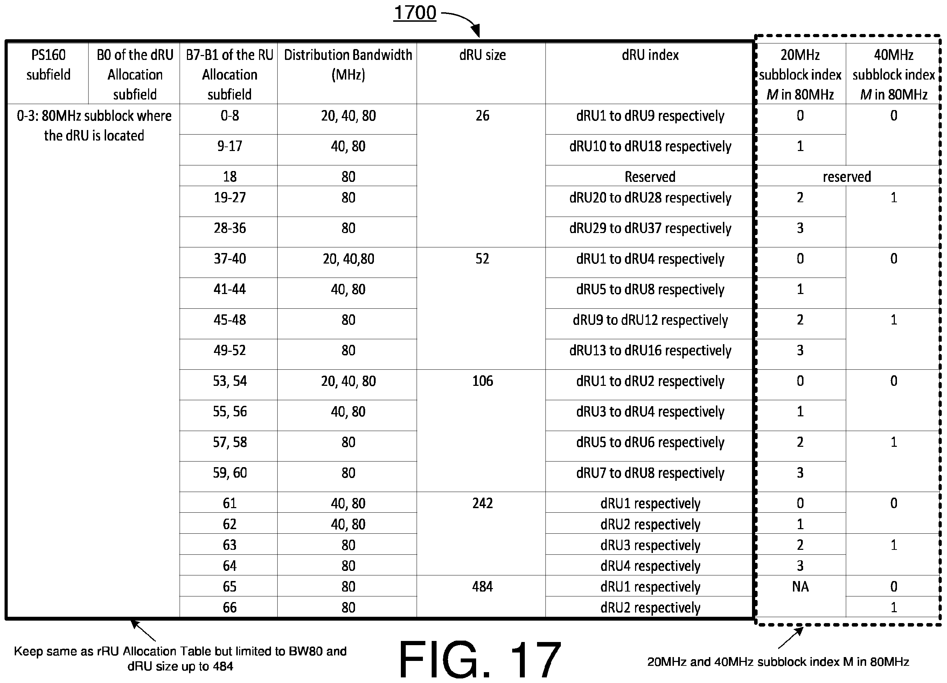

FIG. 17 illustrates an example design 1700 of reusing of rRU allocation subfield for dRU signaling under a proposed scheme in accordance with the present disclosure. Referring to FIG. 17, the left portion of the table shown in FIG. 17 may be kept the same as for rRU Allocation Subfield table but limited to BW80 and dRU size up to 484 tones. Moreover, the right portion of the table shows 20MHz and 40MHz subblock index M in 80MHz.

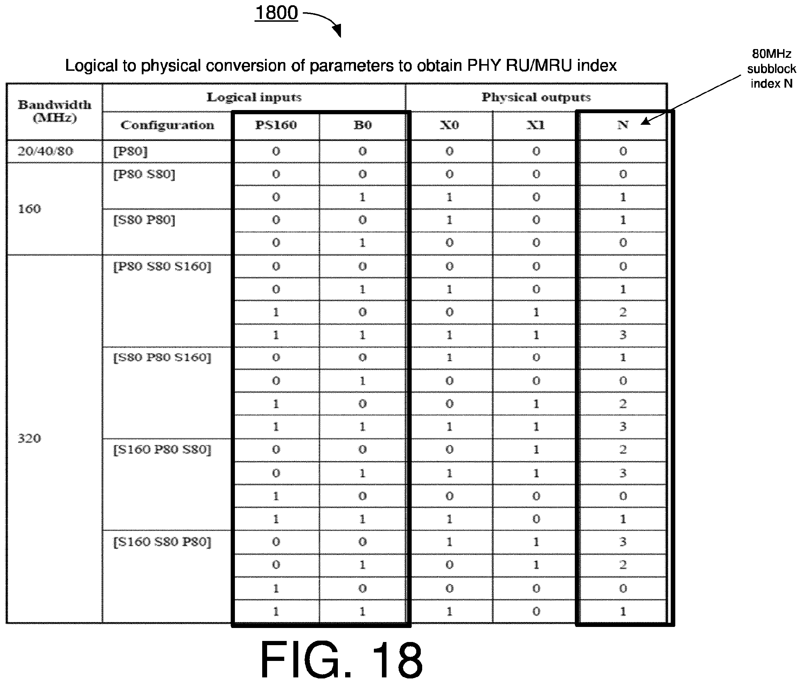

FIG. 18 illustrates an example design 1800 of definition of 80MHz subblock index N under a proposed scheme in accordance with the present disclosure. Referring to FIG. 18, under the proposed scheme, the 80MHz subblock index N may be mapped from P/S160 subfield and B0 of the RU Allocation subfield in the User Information field.

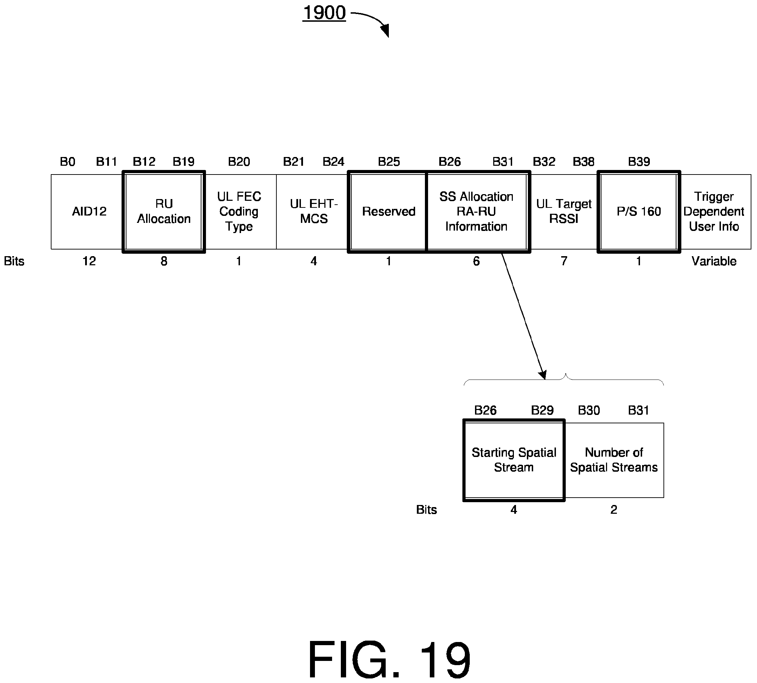

FIG. 19 illustrates an example design 1900 of dRU signaling in a first option (Option A) of a proposed scheme in accordance with the present disclosure. Under the proposed scheme, the RU Allocation subfield and P/S160 subfield may be used to indicate: (a) dRU size, and (b) where the dRU is located or distributed (e.g., indication of 20/40/80MHz subblock indices M and N). Moreover, the reserved bit B25 may be used to indicate RU type or dRU or rRU (e.g., "1" indicates rRU and "0" indicates dRU, or vice versa). It may be assumed that dRU is orthogonal frequency-division multiple-access (OFDMA) only and, in such cases, some of the bits in the "SS Allocation" subfield may be used to indicate the distribution bandwidth or distribution window size for BW ≥ 80MHz. For instance, bits B26-B27 (or B28-B29 or other two bits) may be used to indicate the distribution bandwidth or distribution window size for BW ≥ 80MHz (e.g., "00" indicates dRU over 20MHz subblock, "01" indicates dRU over 40MHz subblock, and "11" (or "10") indicates dRU over 80MHz subblock). For BW20 PPDU and BW40 PPDU, distribution bandwidth may be the same as the PPDU bandwidth.

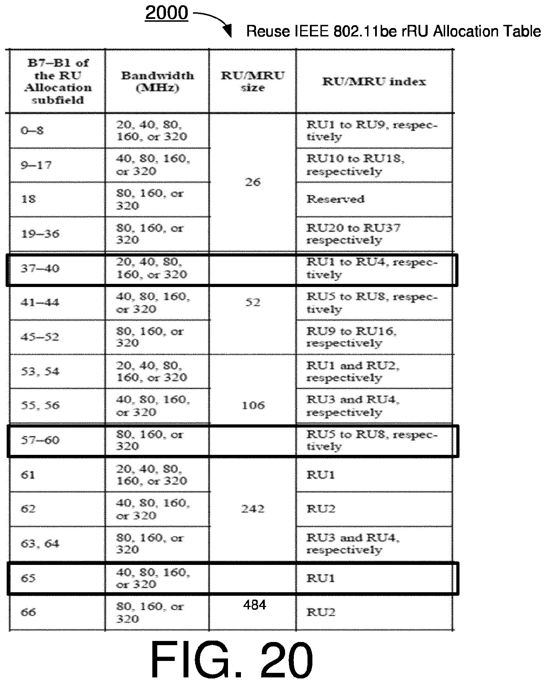

FIG. 20 illustrates an example design 2000 of dRU signaling in various options of the proposed scheme. Referring to FIG. 20, under the proposed scheme, the rRU Allocation Subfield table under IEEE 802.11 be may be reused for dRU signaling.

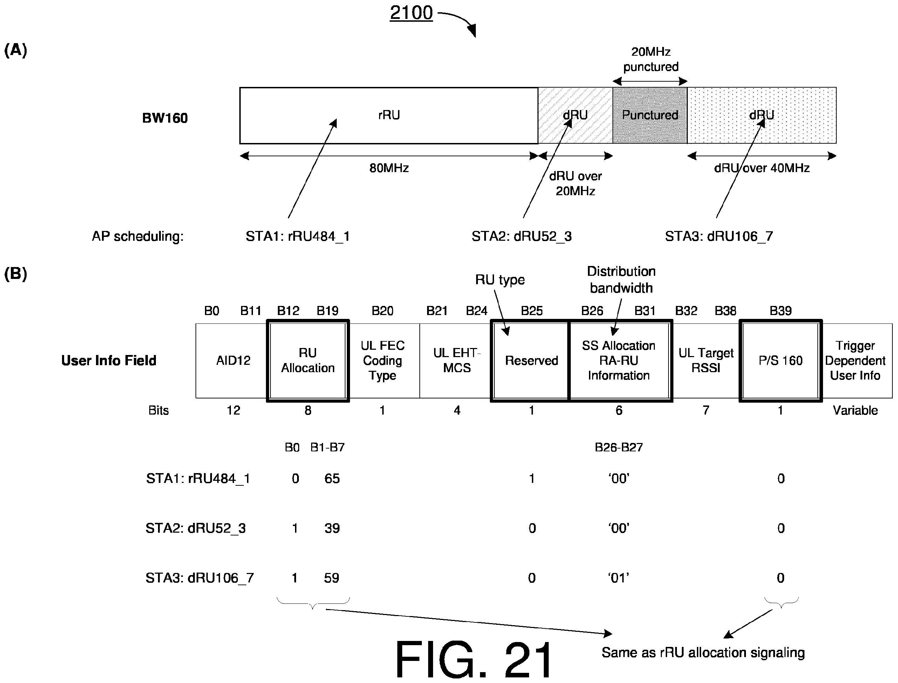

FIG. 21 illustrate an example scenario 2100 of dRU signaling in Option A of the proposed scheme. Referring to part (A) of FIG. 21, for BW160, an AP may schedule different STAs for respective transmissions. For instance, a 484-tone regular RU (rRU484) in an 80MHz subblock may be assigned or otherwise allocated to a first STA (STA1), a 52-tone dRU (dRU52) in a 20MHz subblock may be assigned or otherwise allocated to a second STA (STA2), and a 106-tone dRU (dRU106) in a 40MHz subblock may be assigned or otherwise allocated to a third STA (STA3), while a remaining 20MHz subblock of the BW160 may be punctured. Referring to part (B) of FIG. 21, bits in the RU Allocation subfield, bit B25 of the reserved field, two of the six bits of the Spatial Stream (SS) Allocation subfield, and bit B39 of the P/S160 subfield of the User Information field may be utilized for dRU signaling to STA1, STA2 and STA3. It is noteworthy that the bits of the RU Allocation subfield and P/S160 subfield utilized for dRU signaling may be kept the same as that for rRU allocation signaling.

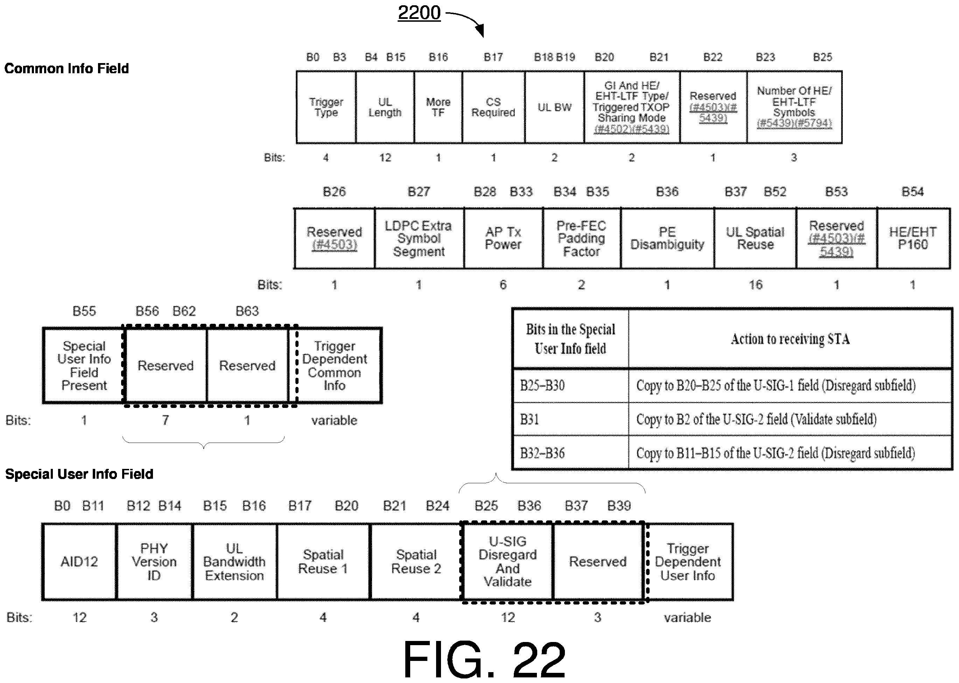

FIG. 22 illustrates an example design 2200 of dRU signaling in a second option (Option B) of a proposed scheme in accordance with the present disclosure. Under the proposed scheme, an alternative dRU signaling method may use the reserved bits in the Common Information field and Special User Information field for dRU signaling. The reserved bits may be redefined to indicate the RU type (rRU or dRU), distribution bandwidth, and puncture pattern for BW ≥ 80MHz.

In Option B, for BW20 and BW40, one bit may be used to indicate the RU type, as the distribution bandwidth may be equivalent to the PPDU bandwidth. For BW ≥ 80MHz, each 80MHz subblock may need four bits (or three bits) for dRU signaling. For instance, a first bit may indicate RU type (e.g., "1" indicates rRU and "0" indicates dRU, or vice versa), a second bit may indicate the puncture mode (e.g., "1" indicates non-puncture and "0" indicates puncture, or vice versa), and third and fourth bits may indicate the puncture pattern (e.g., 4 puncture options). As for the number of bits for dRU signaling, the required number of bits may be one for BW20 and BW40, four or three for BW80, eight or six for BW160, and sixteen or twelve for BW320. Accordingly, the reserved bits in the Common Information field and Special User Information field together may be used for dRU signaling.

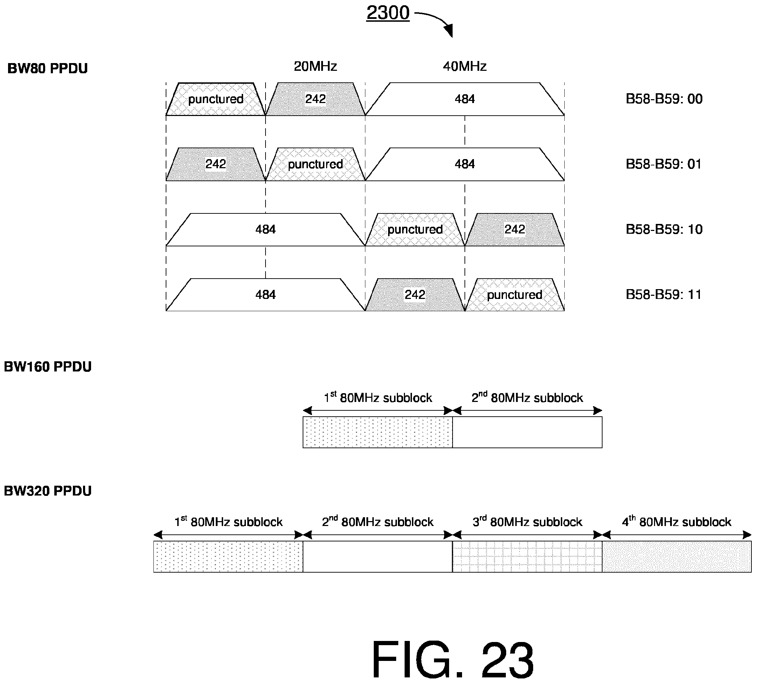

FIG. 23 illustrates an example scenario 2300 of dRU signaling in Option B of the proposed scheme. For a BW20/BW40 PPDU, one reserved bit in the Common Information field (or Disregard bits/Reserved bits in Special User Information field) may be used for dRU signaling. For instance, bit B56 (or another reserved bit) of the Common Information field (or one of Disregard bits/Reserved bits in Special User Information field) may be used to indicate the RU type (e.g., "1" indicates rRU and "0" indicates dRU, or vice versa). The distribution bandwidth may be the same as the PPDU bandwidth (e.g., 20MHz or 40MHz). For a BW80 PPDU, four or three reserved bits in the Common Information (or some of Disregard bits/Reserved bits in Special User Information field) field may be used for dRU signaling. For instance, bits B56∼B59 (or other reserved bits) of the Common Information field (or some of Disregard bits/Reserved bits in Special User Information field) may be redefined, such that: (a) bit B56 may indicate the RU type (e.g., "1" indicates rRU and "0" indicates dRU, or vice versa); (b) bit B57 may indicate dRU mode (e.g., "1" indicates non-puncture mode and "0" indicates puncture mode, or vice versa); and (c) bits B58-B59 may indicate puncture pattern when B56 = 0 and B57 = 0 (e.g., dRU in puncture mode).

For a BW160 PPDU, eight or six reserved bits in the Common Information field (or some of Disregard bits/Reserved bits in Special User Information field) may be used for dRU signaling. For instance, bits B56∼B59 (or other reserved bits) of the Common Information field (or some of Disregard bits/Reserved bits in Special User Information field) may be used for signaling regarding the first 80MHz subblock while bits B60∼B63 (or other reserved bits) of the Common Information field (or some of Disregard bits/Reserved bits in Special User Information field) may be used for signaling regarding the second 80MHz subblock. In such cases: (a) definition of bits B56∼B59 for the first 80MHz subblock may be the same as that of the BW80 PPDU; (b) bit B60 may indicate the RU type (e.g., "1" indicates rRU and "0" indicates dRU, or vice versa); (c) bit B61 may indicate dRU mode (e.g., "1" indicates non-puncture mode and "0" indicates puncture mode, or vice versa); (d) bits B62-B63 may indicate puncture pattern when B60 = 0 and B61 = 0 (e.g., dRU in puncture mode for the second 80MHz subblock); and (e) definition of bits B62-B63 may be the same as that for bits B58-B59.

For a BW320 PPDU, sixteen or twelve reserved bits in the Common Information field and the Special User Information field may be used for dRU signaling. For instance, bits B56∼B59 (or other reserved bits) of the Common Information field may be used for signaling regarding the first 80MHz subblock while bits B60∼B63 (or other reserved bits) of the Common Information field may be used for signaling regarding the second 80MHz subblock, as defined for BW160. Moreover, bits B25∼B28 (or other four Disregard/reserved bits) of the Special User Information field may be used for dRU signaling regarding the third 80MHz subblock. Similarly, bits B32∼B35 (or other four Disregard/reserved bits) of the Special User Information field may be used for dRU signaling regarding the fourth 80MHz subblock. Definitions of the Disregard/reserved bits B25∼B28 and B32∼B35 in the Special User Information field may be similar as that for the reserved bits B56∼B59 and B60∼B63 in the Common Information field. For instance, (a) a first bit may indicate the RU type (e.g., "1" indicates rRU and "0" indicates dRU, or vice versa); (b) a second bit may indicate dRU mode (e.g., "1" indicates non-puncture mode and "0" indicates puncture mode, or vice versa); and (c) third and fourth bits may indicate puncture pattern when B56 = 0 and B57 = 0 (e.g., dRU in puncture mode).

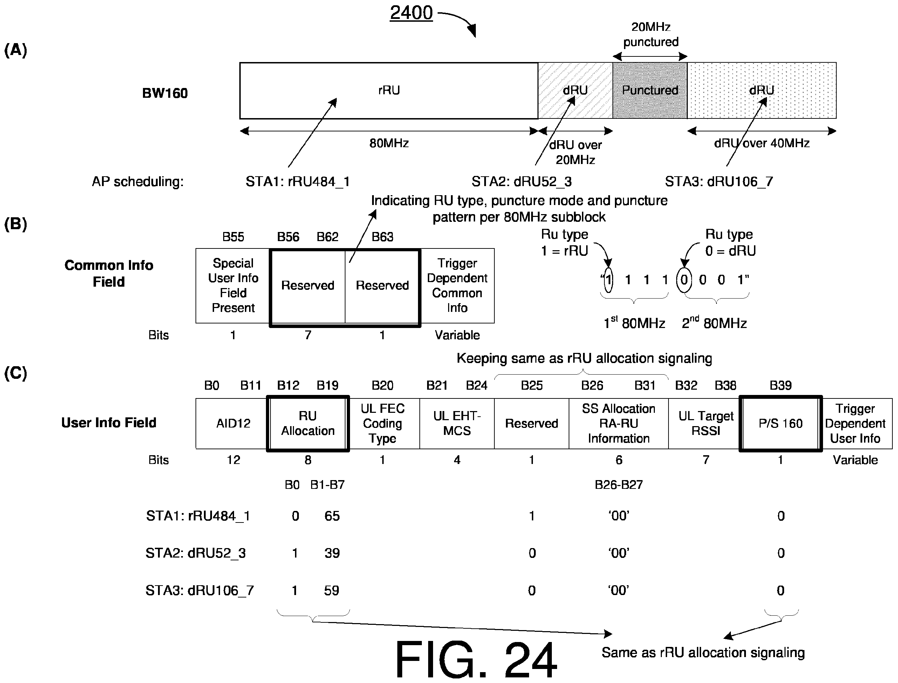

FIG. 24 illustrate an example scenario 2400 of dRU signaling in Option B of the proposed scheme. Referring to part (A) of FIG. 24, for BW160, an AP may schedule different STAs for respective transmissions. For instance, a 484-tone regular RU (rRU484) in an 80MHz subblock may be assigned or otherwise allocated to a first STA (STA1), a 52-tone dRU (dRU52) in a 20MHz subblock may be assigned or otherwise allocated to a second STA (STA2), and a 106-tone dRU (dRU106) in a 40MHz subblock may be assigned or otherwise allocated to a third STA (STA3), while a remaining 20MHz subblock of the BW160 may be punctured. Referring to part (B) of FIG. 24, eight reserved bits B56∼B62 and B63 in the Common Information field may be used to indicate the RU type, puncture mode and puncture pattern per 80MHz subblock. For instance, a value of "1" in B56 may indicate rRU as the RU type for the first 80MHz subblock of the BW160, and a value of "0" in B60 may indicate dRU as the RU type for the second 80MHz subblock of the BW160. Referring to part (C) of FIG. 24, bits in the RU Allocation subfield, bit B25 of the reserved field, two of the six bits of the SS Allocation subfield, and bit B39 of the P/S160 subfield of the User Information field may be utilized for dRU signaling to STA1, STA2 and STA3. It is noteworthy that the bits of the RU Allocation subfield and P/S160 subfield utilized for dRU signaling may be kept the same as that for rRU allocation signaling.

In a third option (Option C) of the proposed scheme, both Option A and Option B described above may be combined for dRU signaling. Thus, dRU operation may be indicated by using reserved bits in the Common Information field (or disregarded bits and/or reserved bits in the Special User Information field) to indicate the RU type (e.g., rRU or dRU) and by using two bits of the SS Allocation subfield in the User Information field to indicate the dRU distribution bandwidth when the RU type is dRU. One or two bits of the SS Allocation subfield in the User Information field are used to indicate number of spatial streams per STA. The number of reserved bits in the Common Information field (or Special User Information field) used to indicate the RU type may vary depending on the bandwidth. For instance, one bit may be used for BW20, BW40 and BW80, two bits may be used for BW160 (e.g., one bit per 80MHz subblock), and four bits may be used for BW320 (e.g., one bit per 80MHz subblock). Furthermore, in case the reserved bits in the Common Information field are used to indicate the RU type, the bitmap for RU type indication may vary depending on the bandwidth. For instance, for BW20/40/80, bit B56 may be "1" for rRU and "0" for dRU (or vice versa). For BW160 using bits B56-B57, bit B56 may be "1" for rRU on the first 80MHz subblock, B56 may be "0" for dRU on the first 80MHz subblock, B57 may be "1" for rRU on the second 80MHz subblock and B57 may be "0" for dRU on the second 80MHz subblock. For BW320 using bits B56∼B59, B56 may be "1" for rRU on the first 80MHz subblock, B56 may be "0" for dRU on the first 80MHz subblock, B57 may be "1" for rRU on the second 80MHz subblock, B57 may be "0" for dRU on the second 80MHz subblock, B58 may be "1" for rRU on the third 80MHz subblock, B58 may be "0" for dRU on the third 80MHz subblock, B59 may be "1" for rRU on the fourth 80MHz subblock, and B59 may be "0" for dRU on the fourth 80MHz subblock.

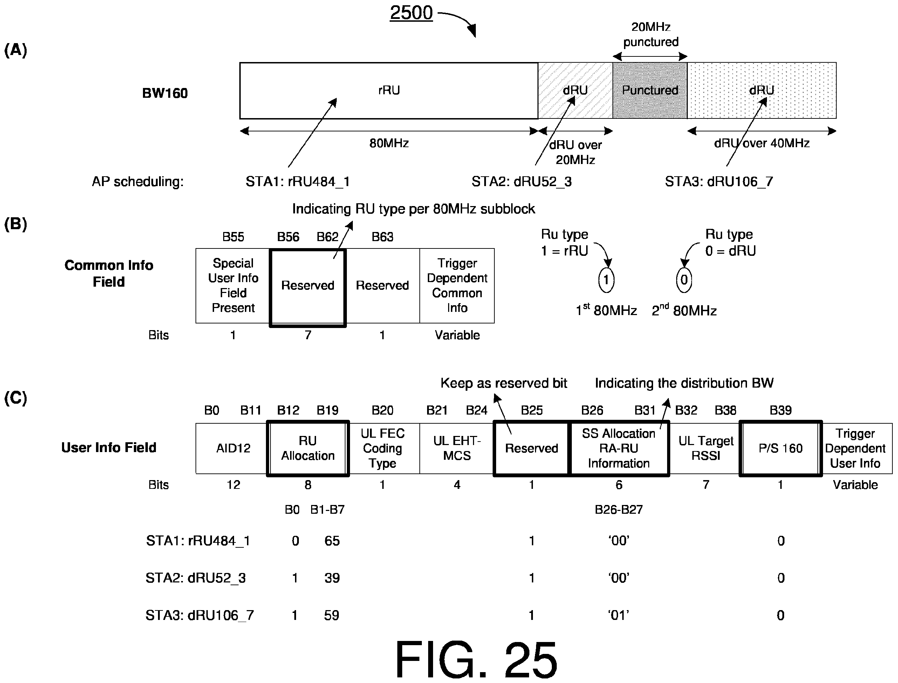

FIG. 25 illustrate an example scenario 2500 of dRU signaling in Option C of the proposed scheme. Referring to part (A) of FIG. 25, for BW160, an AP may schedule different STAs for respective transmissions. For instance, a 484-tone regular RU (rRU484) in an 80MHz subblock may be assigned or otherwise allocated to a first STA (STA1), a 52-tone dRU (dRU52) in a 20MHz subblock may be assigned or otherwise allocated to a second STA (STA2), and a 106-tone dRU (dRU106) in a 40MHz subblock may be assigned or otherwise allocated to a third STA (STA3), while a remaining 20MHz subblock of the BW160 may be punctured. Referring to part (B) of FIG. 25, two of the reserved bits B56∼B62 in the Common Information field may be used to indicate the RU type. For instance, a value of "1" in B56 (or another bit) may indicate rRU as the RU type for the first 80MHz subblock of the BW160, and a value of "0" in B57 (or another bit) may indicate dRU as the RU type for the second 80MHz subblock of the BW160. Referring to part (C) of FIG. 25, bits in the RU Allocation subfield, bit B25 of the reserved field, two of the six bits of the SS Allocation subfield, and bit B39 of the P/S160 subfield of the User Information field may be utilized for dRU signaling to STA1, STA2 and STA3. It is noteworthy that the reserved bit B25 may be kept as a reserved bit, and bits B26 and B27 of the SS Allocation subfield may indicate the distribution bandwidth.

### Illustrative Implementations

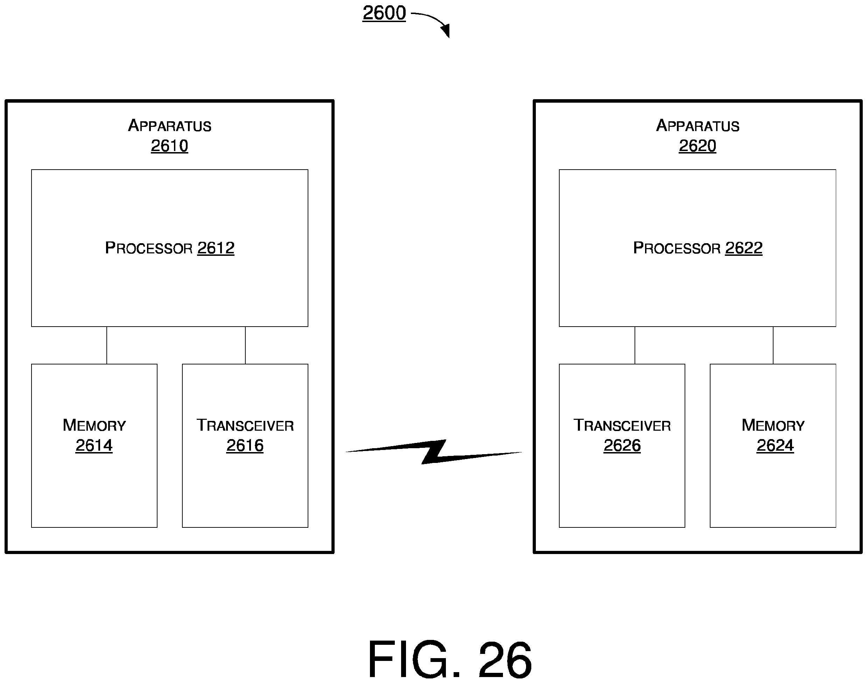

FIG. 26 illustrates an example system 2600 having at least an example apparatus 2610 and an example apparatus 2620 in accordance with an implementation of the present disclosure. Each of apparatus 2610 and apparatus 2620 may perform various functions to implement schemes, techniques, processes and methods described herein pertaining to signaling for UL TB PPDU with dRUs in 6GHz LPI systems, including the various schemes described above with respect to various proposed designs, concepts, schemes, systems and methods described above as well as processes described below. For instance, apparatus 2610 may be implemented in STA 110 and apparatus 2620 may be implemented in STA 120, or vice versa.

Each of apparatus 2610 and apparatus 2620 may be a part of an electronic apparatus, which may be a STA or an AP, such as a portable or mobile apparatus, a wearable apparatus, a wireless communication apparatus or a computing apparatus. When implemented in a STA, each of apparatus 2610 and apparatus 2620 may be implemented in a smartphone, a smart watch, a personal digital assistant, a digital camera, or a computing equipment such as a tablet computer, a laptop computer or a notebook computer. Each of apparatus 2610 and apparatus 2620 may also be a part of a machine type apparatus, which may be an loT apparatus such as an immobile or a stationary apparatus, a home apparatus, a wire communication apparatus or a computing apparatus. For instance, each of apparatus 2610 and apparatus 2620 may be implemented in a smart thermostat, a smart fridge, a smart door lock, a wireless speaker or a home control center. When implemented in or as a network apparatus, apparatus 2610 and/or apparatus 2620 may be implemented in a network node, such as an AP in a WLAN.

In some implementations, each of apparatus 2610 and apparatus 2620 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 2610 and apparatus 2620 may be implemented in or as a STA or an AP. Each of apparatus 2610 and apparatus 2620 may include at least some of those components shown in FIG. 26 such as a processor 2612 and a processor 2622, respectively, for example. Each of apparatus 2610 and apparatus 2620 may further include one or more other components not pertinent to the proposed scheme of the present disclosure (e.g., internal power supply, display device and/or user interface device), and, thus, such component(s) of apparatus 2610 and apparatus 2620 are neither shown in FIG. 26 nor described below in the interest of simplicity and brevity.

In one aspect, each of processor 2612 and processor 2622 may be implemented in the form of one or more single-core processors, one or more multi-core processors, one or more RISC processors or one or more CISC processors. That is, even though a singular term "a processor" is used herein to refer to processor 2612 and processor 2622, each of processor 2612 and processor 2622 may include multiple processors in some implementations and a single processor in other implementations in accordance with the present disclosure. In another aspect, each of processor 2612 and processor 2622 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 2612 and processor 2622 is a special-purpose machine specifically designed, arranged and configured to perform specific tasks including those pertaining to signaling for UL TB PPDU with dRUs in 6GHz LPI systems in accordance with various implementations of the present disclosure.

In some implementations, apparatus 2610 may also include a transceiver 2616 coupled to processor 2612. Transceiver 2616 may include a transmitter capable of wirelessly transmitting and a receiver capable of wirelessly receiving data. In some implementations, apparatus 2620 may also include a transceiver 2626 coupled to processor 2622. Transceiver 2626 may include a transmitter capable of wirelessly transmitting and a receiver capable of wirelessly receiving data. It is noteworthy that, although transceiver 2616 and transceiver 2626 are illustrated as being external to and separate from processor 2612 and processor 2622, respectively, in some implementations, transceiver 2616 may be an integral part of processor 2612 as a system on chip (SoC) and/or transceiver 2626 may be an integral part of processor 2622 as a SoC.

In some implementations, apparatus 2610 may further include a memory 2614 coupled to processor 2612 and capable of being accessed by processor 2612 and storing data therein. In some implementations, apparatus 2620 may further include a memory 2624 coupled to processor 2622 and capable of being accessed by processor 2622 and storing data therein. Each of memory 2614 and memory 2624 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 2614 and memory 2624 may include a type of read-only memory (ROM) such as mask ROM, programmable ROM (PROM), erasable programmable ROM (EPROM) and/or electrically erasable programmable ROM (EEPROM). Alternatively, or additionally, each of memory 2614 and memory 2624 may include a type of non-volatile random-access memory (NVRAM) such as flash memory, solid-state memory, ferroelectric RAM (FeRAM), magnetoresistive RAM (MRAM) and/or phase-change memory.

Each of apparatus 2610 and apparatus 2620 may be a communication entity capable of communicating with each other using various proposed schemes in accordance with the present disclosure. For illustrative purposes and without limitation, a description of capabilities of apparatus 2610, as STA 110, and apparatus 2620, as STA 120, is provided below. It is noteworthy that, although a detailed description of capabilities, functionalities and/or technical features of apparatus 2610 is provided below, the same may be applied to apparatus 2620 although a detailed description thereof is not provided solely in the interest of brevity. It is also noteworthy that, although the example implementations described below are provided in the context of WLAN, the same may be implemented in other types of networks.

Under a proposed scheme pertaining to signaling for UL TB PPDU with dRUs in 6GHz LPI systems in accordance with the present disclosure, with apparatus 2610 implemented in or as STA 110 functioning as a non-AP STA and apparatus 2620 implemented in or as STA 120 functioning as an AP STA in network environment 100, processor 2612 of apparatus 2610 may receive, via transceiver 2616, a trigger frame from apparatus 2620. Additionally, processor 2612 may generate and transmit, via transceiver 2616, a PPDU with a dRU to apparatus 2620 in response to the trigger frame signaling an indication of a RU type (e.g., rRU or dRU) and that a dRU operation is enabled. Similarly, processor 2622 of apparatus 2620 may transmit, via transceiver 2626, the trigger frame to apparatus 2610. Moreover, processor 2622 may receive, via transceiver 2626, the PPDU with the dRU in response to the trigger frame signaling the indication of the RU type (e.g., rRU or dRU) and that the dRU operation is enabled.

In some implementations, the trigger frame may signal that the dRU operation is enabled by using an RU allocation subfield table designed for rRUs with continuous tones that are not interleaved, interlaced or distributed to indicate one or more aspects of the dRU operation. In such cases, in transmitting the PPDU with the dRU, processor 2612 may generate the PPDU by interpreting the RU allocation subfield table designed for rRUs to determine allocation of tones of the dRU.

In some implementations, the indication may include an indication of each of the RU type as a rRU or dRU, a dRU distribution bandwidth, and a dRU allocation comprising a dRU size and a dRU index.

In some implementations, the indication may be signaled by using one or more reserved bits in a Common Information field of the trigger frame. In some implementations, the indication may include a bitmap of up to 4 bits (with 1 bit per 80MHz subblock) indicating a RU type per 80MHz segment or frequency subblock as being dRU or rRU. Alternatively, or additionally, the indication may include: (a) in an event that an UL bandwidth is 80MHz or less, one bit in a reserved field indicating whether the dRU operation is enabled or disabled over an entire bandwidth, or (b) in an event that the UL bandwidth is 160MHz or 320MHz, two bits or four bits in the reserved field indicating one of: (i) a transmission of a rRU, (ii) a transmission of the rRU and the dRU, (iii) a transmission of per-80MHz segment dRU, and (iv) a transmission of the dRU with a duplication.

In some implementations, the indication may be signaled by using one or more Disregard bits, or one or more reserved bits, or both the one or more Disregard bits and the one or more reserved bits (e.g., one or more Disregard bits and/or one or more reserved bits) in a Special User Information field of the trigger frame. In some implementations, the indication may include a bitmap of up to 4 bits of the Disregard bits and/or Reserved bits in Special User Information field (with 1 bit per 80MHz subblock) indicating a RU type per 80MHz segment or frequency subblock as being dRU or rRU.

In some implementations, the indication may be signaled in a User Information field of the trigger frame. In some implementations, the indication may include at least one of the following: (a) a reserved bit indicating the RU type or whether the dRU operation is enabled or disabled (or RU type is rRU or dRU), (b) one or more bits in an SS allocation subfield indicating a distribution bandwidth or distribution window size for tones of the dRU in an event that the RU type indicates dRU, (c) one or more bits in a combination of an RU allocation subfield and a P/S160 subfield indicating one or more 80MHz segments or frequency subblocks on which the dRU is transmitted, and (d) one or two bits of the SS Allocation field indicating a number of spatial streams.

In some implementations, the indication may be signaled in a User Information field of the trigger frame and either or both of a Common Information field and a Special User Information field of the trigger frame. In some implementations, the indication may include at least one of the following: (a) a reserved bit in the Common Information field indicating a RU type, (b) two bits in an SS allocation subfield in the User Information field indicating a distribution bandwidth or distribution window size for tones of the dRU in an event that the RU type indicates dRU, (c) one or more reserved bits in the Common Information field or one or more Disregard bits and/or one or more Reserved bits in the Special User Information field indicating one or more 80MHz segments or frequency subblocks on which the dRU or rRU is transmitted, and (d) one or two bits of the SS Allocation field indicating a number of spatial streams.

In some implementations, the dRU operation may include one of the following: (a) a tone distribution operation of the dRU over an entire PPDU bandwidth of 20MHz, 40MHz or 80MHz, (b) a per-80MHz segment or frequency subblock tone distribution operation of the dRU over a wide bandwidth of 160MHz or 320MHz, (c) a first hybrid mode operation of the dRU and a rRU on different 80MHz subblocks in the wide bandwidth of 160MHz or 320MHz, (d) a puncture mode operation of the dRU on 20MHz and 40MHz subblocks in a bandwidth of 80MHz or in 80MHz frequency subblocks in the wide bandwidth of 160MHz or 320MHz, (e) a second hybrid mode operation of the dRU and the rRU with the dRU being in the puncture mode, (f) a first multi-dRU operation with one of multiple dRUs on each of multiple 80MHz subblocks and with one of the multiple 80MHz subblocks being in the puncture mode, and (g) a second multi-dRU operation with one of the multiple dRUs on each of the multiple 80MHz subblocks and with each of the multiple 80MHz subblocks being in the puncture mode.

In some implementations, in transmitting the PPDU, processor 2612 may transmit an UL TB PPDU in a 6GHz LPI system. Similarly, in receiving the PPDU, processor 2622 may receive the UL TB PPDU in the 6GHz LPI system.

### Illustrative Processes

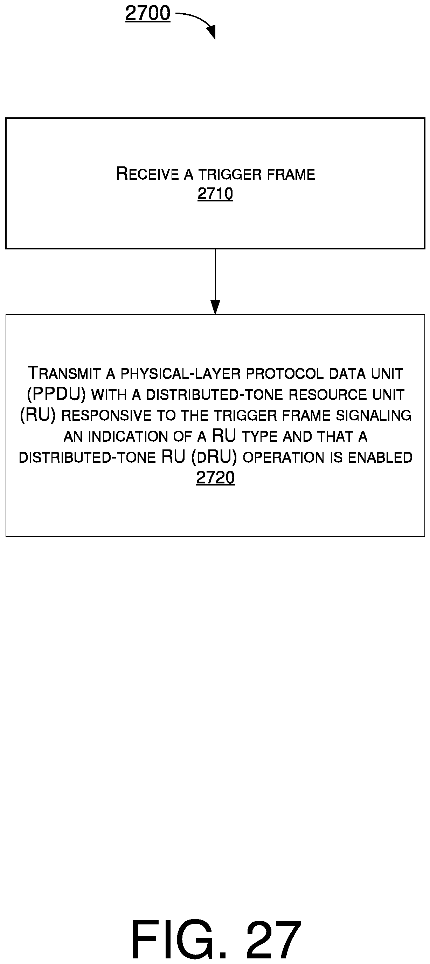

FIG. 27 illustrates an example process 2700 in accordance with an implementation of the present disclosure. Process 2700 may represent an aspect of implementing various proposed designs, concepts, schemes, systems and methods described above. More specifically, process 2700 may represent an aspect of the proposed concepts and schemes pertaining to signaling for UL TB PPDU with dRUs in 6GHz LPI systems in accordance with the present disclosure. Process 2700 may include one or more operations, actions, or functions as illustrated by one or more of blocks 2710 and 2720. Although illustrated as discrete blocks, various blocks of process 2700 may be divided into additional blocks, combined into fewer blocks, or eliminated, depending on the desired implementation. Moreover, the blocks/subblocks of process 2700 may be executed in the order shown in FIG. 27 or, alternatively in a different order. Furthermore, one or more of the blocks/sub-blocks of process 2700 may be executed repeatedly or iteratively. Process 2700 may be implemented by or in apparatus 2610 and apparatus 2620 as well as any variations thereof. Solely for illustrative purposes and without limiting the scope, process 2700 is described below in the context of apparatus 2610 implemented in or as STA 110 functioning as a non-AP STA and apparatus 2620 implemented in or as STA 120 functioning as an AP STA of a wireless network such as a WLAN in network environment 270 in accordance with one or more of IEEE 802.11 standards. Process 2700 may begin at block 2710.

At 2710, process 2700 may involve processor 2612 of apparatus 2610 receiving, via transceiver 2616, a trigger frame from apparatus 2620. Process 2700 may proceed from 2710 to 2720.

At 2720, process 2700 may involve processor 2612 transmitting, via transceiver 2616, a PPDU with a dRU to apparatus 2620 in response to the trigger frame signaling an indication of a RU type (e.g., rRU or dRU) and that a dRU operation is enabled.

In some implementations, the trigger frame may signal that the dRU operation is enabled by using an RU allocation subfield table designed for rRUs with continuous tones that are not interleaved, interlaced or distributed to indicate one or more aspects of the dRU operation. In such cases, in transmitting the PPDU with the dRU, process 2700 may involve processor 2612 generating the PPDU by interpreting the RU allocation subfield table designed for rRUs to determine allocation of tones of the dRU.

In some implementations, the indication may include an indication of each of the RU type as a rRU or dRU, a dRU distribution bandwidth, and a dRU allocation comprising a dRU size and a dRU index.

In some implementations, the indication may be signaled by using one or more reserved bits in a Common Information field of the trigger frame. In some implementations, the indication may include a bitmap of up to 4 bits (with 1 bit per 80MHz subblock) indicating a RU type per 80MHz segment or frequency subblock as being dRU or rRU. Alternatively, or additionally, the indication may include: (a) in an event that an UL bandwidth is 80MHz or less, one bit in a reserved field indicating whether the dRU operation is enabled or disabled over an entire bandwidth, or (b) in an event that the UL bandwidth is 160MHz or 320MHz, two bits or four bits in the reserved field indicating one of: (i) a transmission of a rRU, (ii) a transmission of the rRU and the dRU, (iii) a transmission of per-80MHz segment dRU, and (iv) a transmission of the dRU with a duplication.

In some implementations, the indication may be signaled by using one or more Disregard bits, or one or more reserved bits, or both the one or more Disregard bits and the one or more reserved bits (e.g., one or more Disregard bits and/or one or more reserved bits) in a Special User Information field of the trigger frame. In some implementations, the indication may include a bitmap of up to 4 bits (with 1 bit per 80MHz subblock) indicating a RU type per 80MHz segment or frequency subblock as being dRU or rRU.

In some implementations, the indication may be signaled in a User Information field of the trigger frame. In some implementations, the indication may include at least one of the following: (a) a reserved bit indicating the RU type or whether the dRU operation is enabled or disabled, (b) one or more bits in an SS allocation subfield indicating a distribution bandwidth or distribution window size for tones of the dRU in an event that the RU type indicates dRU, (c) one or more bits in a combination of an RU allocation subfield and a P/S160 subfield indicating one or more 80MHz segments or frequency subblocks on which the dRU is transmitted, and (d) one or two bits of the SS Allocation field indicating a number of the spatial streams.

In some implementations, the indication may be signaled in a User Information field of the trigger frame and either or both of a Common Information field and a Special User Information field of the trigger frame. In some implementations, the indication may include at least one of the following: (a) a reserved bit in the Common Information field or a Disregard bit or a Reserved bit in Special User Information field indicating a RU type, (b) two bits in an SS allocation subfield in the User Information field indicating a distribution bandwidth or distribution window size for tones of the dRU in an event that the RU type indicates dRU, (c) one or more reserved bits in the Common Information field or one or more Disregard bits and/or one or more Reserved bits in the Special User Information field indicating one or more 80MHz segments or frequency subblocks on which the dRU is transmitted, and (d) one or two bits of the SS Allocation field indicating a number of the spatial streams.

In some implementations, the dRU operation may include one of the following: (a) a tone distribution operation of the dRU over an entire PPDU bandwidth of 20MHz, 40MHz or 80MHz, (b) a per-80MHz segment or frequency subblock tone distribution operation of the dRU over a wide bandwidth of 160MHz or 320MHz, (c) a first hybrid mode operation of the dRU and a rRU on different 80MHz subblocks in the wide bandwidth of 160MHz or 320MHz, (d) a puncture mode operation of the dRU on 20MHz and 40MHz subblocks in a bandwidth of 80MHz or in 80MHz frequency subblocks in the wide bandwidth of 160MHz or 320MHz, (e) a second hybrid mode operation of the dRU and the rRU with the dRU being in the puncture mode, (f) a first multi-dRU operation with one of multiple dRUs on each of multiple 80MHz subblocks and with one of the multiple 80MHz subblocks being in the puncture mode, and (g) a second multi-dRU operation with one of the multiple dRUs on each of the multiple 80MHz subblocks and with each of the multiple 80MHz subblocks being in the puncture mode.

In some implementations, in transmitting the PPDU, process 2700 may involve processor 2612 transmitting an UL TB PPDU in a 6GHz LPI system.

FIG. 28 illustrates an example process 2800 in accordance with an implementation of the present disclosure. Process 2800 may represent an aspect of implementing various proposed designs, concepts, schemes, systems and methods described above. More specifically, process 2800 may represent an aspect of the proposed concepts and schemes pertaining to signaling for UL TB PPDU with dRUs in 6GHz LPI systems in accordance with the present disclosure. Process 2800 may include one or more operations, actions, or functions as illustrated by one or more of blocks 2810 and 2820. Although illustrated as discrete blocks, various blocks of process 2800 may be divided into additional blocks, combined into fewer blocks, or eliminated, depending on the desired implementation. Moreover, the blocks/subblocks of process 2800 may be executed in the order shown in FIG. 28 or, alternatively in a different order. Furthermore, one or more of the blocks/sub-blocks of process 2800 may be executed repeatedly or iteratively. Process 2800 may be implemented by or in apparatus 2610 and apparatus 2620 as well as any variations thereof. Solely for illustrative purposes and without limiting the scope, process 2800 is described below in the context of apparatus 2610 implemented in or as STA 110 and apparatus 2620 implemented in or as STA 120 of a wireless network such as a WLAN in network environment 280 in accordance with one or more of IEEE 802.11 standards. Process 2800 may begin at block 2810.

At 2810, process 2800 may involve processor 2622 of apparatus 2620 transmitting, via transceiver 2626, a trigger frame to apparatus 2610. Process 2800 may proceed from 2810 to 2820.

At 2820, process 2800 may involve processor 2622 receiving, via transceiver 2626, a PPDU with a dRU in response to the trigger frame signaling an indication of a RU type (e.g., rRU or dRU) and that a dRU operation is enabled.

In some implementations, the trigger frame may signal that the dRU operation is enabled by using an RU allocation subfield table designed for rRUs with continuous tones that are not interleaved, interlaced or distributed to indicate one or more aspects of the dRU operation.

In some implementations, the indication may include an indication of each of a RU type, a dRU distribution bandwidth, and a dRU allocation comprising a dRU size and a dRU index.

In some implementations, the indication may be signaled by using one or more reserved bits in a Common Information field of the trigger frame. In some implementations, the indication may include a bitmap of up to 4 bits (with 1 bit per 80MHz subblock) indicating a RU type per 80MHz segment or frequency subblock as being dRU or rRU. Alternatively, or additionally, the indication may include: (a) in an event that an UL bandwidth is 80MHz or less, one bit in a reserved field indicating whether the dRU operation is enabled or disabled over an entire bandwidth, or (b) in an event that the UL bandwidth is 160MHz or 320MHz, two bits or four bits in the reserved field indicating one of: (i) a transmission of a rRU, (ii) a transmission of the rRU and the dRU, (iii) a transmission of per-80MHz segment dRU, and (iv) a transmission of the dRU with a duplication.

In some implementations, the indication may be signaled by using one or more Disregard bits and/or one or more reserved bits in a Special User Information field of the trigger frame. In some implementations, the indication may include a bitmap of up to 4 bits (with 1 bit per 80MHz subblock) indicating a RU type per 80MHz segment or frequency subblock as being dRU or rRU.

In some implementations, the indication may be signaled in a User Information field of the trigger frame. In some implementations, the indication may include at least one of the following: (a) a reserved bit indicating the RU type as a dRU or rRU or whether the dRU operation is enabled or disabled, (b) one or more bits in an SS allocation subfield indicating a distribution bandwidth or distribution window size for tones of the dRU in an event that the RU type indicates dRU, (c) one or more bits in a combination of an RU allocation subfield and a P/S160 subfield indicating one or more 80MHz segments or frequency subblocks on which the dRU is transmitted, and (d) one or two bits of the SS Allocation field indicating a number of spatial streams.

In some implementations, the indication may be signaled in a User Information field of the trigger frame and either or both of a Common Information field and a Special User Information field of the trigger frame. In some implementations, the indication may include at least one of the following: (a) a reserved bit in the Common Information field indicating a RU type, (b) two bits in an SS allocation subfield in the User Information field indicating a distribution bandwidth or window size for tones of the dRU in an event that the RU type indicates dRU, (c) one or more reserved bits in the Common Information field or one or more Disregard bits and/or one or more Reserved bits in the Special User Information field indicating one or more 80MHz segments or frequency subblocks on which the dRU is transmitted, and (d) one or two bits of the SS Allocation field indicating a number of spatial streams.

In some implementations, the dRU operation may include one of the following: (a) a tone distribution operation of the dRU over an entire PPDU bandwidth of 20MHz, 40MHz or 80MHz, (b) a per-80MHz segment or frequency subblock tone distribution operation of the dRU over a wide bandwidth of 160MHz or 320MHz, (c) a first hybrid mode operation of the dRU and a rRU on different 80MHz subblocks in the wide bandwidth of 160MHz or 320MHz, (d) a puncture mode operation of the dRU on 20MHz and 40MHz subblocks in a bandwidth of 80MHz or in 80MHz frequency subblocks in the wide bandwidth of 160MHz or 320MHz, (e) a second hybrid mode operation of the dRU and the rRU with the dRU being in the puncture mode, (f) a first multi-dRU operation with one of multiple dRUs on each of multiple 80MHz subblocks and with one of the multiple 80MHz subblocks being in the puncture mode, and (g) a second multi-dRU operation with one of the multiple dRUs on each of the multiple 80MHz subblocks and with each of the multiple 80MHz subblocks being in the puncture mode.

In some implementations, in receiving the PPDU, process 2800 may involve processor 2622 receiving an UL TB PPDU in a 6GHz LPI system.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
receiving a trigger frame (2710); and
transmitting a physical-layer protocol data unit, in the following also referred to as PPDU, with a distributed-tone resource unit, in the following also referred to as RU, responsive to the trigger frame signaling an indication of a RU type and that a distributed-tone RU, in the following also referred to as dRU, operation is enabled (2720).

2. The method of Claim 1, wherein the trigger frame signals that the dRU operation is enabled by using an RU allocation subfield table designed for regular resource units, in the following also referred to as rRUs, with continuous tones that are not interleaved, interlaced or distributed to indicate one or more aspects of the dRU operation, and wherein the transmitting of the PPDU with the dRU comprises generating the PPDU by interpreting the RU allocation subfield table designed for rRUs to determine allocation of tones of the dRU.

3. The method of Claim 1 or 2, wherein the indication comprises an indication of each of:
the RU type, in particular as a rRU or a dRU,
a dRU distribution bandwidth, and
a dRU allocation comprising a dRU size and a dRU index.

4. The method of any one of Claims 1 to 3, wherein the indication is signaled by using one or more reserved bits in a Common Information field of the trigger frame.

5. The method of Claim 4, wherein the indication comprises a bitmap of up to 4 bits, with 1 bit per 80MHz subblock, indicating a RU type per 80MHz segment or frequency subblock as being dRU or rRU.

6. The method of Claim 4 or 5, wherein the indication comprises:
in an event that an uplink, in the following also referred to as UL, bandwidth is 80MHz or less, one bit in a reserved field indicating whether the dRU operation is enabled or disabled over an entire bandwidth, or
in an event that the UL bandwidth is 160MHz or 320MHz, two bits or four bits in the reserved field indicating one of:
a transmission of a rRU,
a transmission of the rRU and the dRU,
a transmission of per-80MHz segment dRU, and
a transmission of the dRU with a duplication.

7. The method of any one of Claims 1 to 6, wherein the indication is signaled by using one or more Disregard bits, or one or more reserved bits, or both the one or more Disregard bits and the one or more reserved bits in a Special User Information field of the trigger frame; and/or
wherein the indication comprises a bitmap of up to 4 bits, with 1 bit per 80MHz subblock, indicating a RU type per 80MHz segment or frequency subblock as being dRU or rRU.

8. The method of any one of Claims 1 to 7, wherein the indication is signaled in a User Information field of the trigger frame;
wherein preferably the indication comprises at least one of:
a reserved bit indicating the RU type or whether the dRU operation is enabled or disabled,
one or more bits in a spatial stream, in the following also referred to as SS, allocation subfield indicating a distribution bandwidth or distribution window size for tones of the dRU in an event that the RU type indicates dRU,
one or more bits in a combination of an RU allocation subfield and a primary/secondary 160, in the following also referred to as P/S160, subfield indicating one or more 80MHz segments or frequency subblocks on which the dRU is transmitted, and
one or two bits of the SS allocation subfield indicating a number of spatial streams.

9. The method of any one of Claims 1 to 8, wherein the indication is signaled in a User Information field of the trigger frame and either or both of a Common Information field and a Special User Information field of the trigger frame;
wherein preferably the indication comprises at least one of:
a reserved bit in the Common Information field indicating a RU type,
two bits in a SS allocation subfield in the User Information field indicating a distribution bandwidth or window size for tones of the dRU in an event that the RU type indicates dRU, and
one or more reserved bits in the Common Information field or one or more Disregard bits, or one or more reserved bits, or both the one or more Disregard bits and the one or more reserved bits in the Special User Information field indicating one or more 80MHz segments or frequency subblocks on which the dRU is transmitted.

10. The method of any one of Claims 1 to 9, wherein the dRU operation comprises one of:
a tone distribution operation of the dRU over an entire PPDU bandwidth of 20MHz, 40MHz or 80MHz,
a per-80MHz segment or frequency subblock tone distribution operation of the dRU over a wide bandwidth of 160MHz or 320MHz,
a first hybrid mode operation of the dRU and a rRU on different 80MHz subblocks in the wide bandwidth of 160MHz or 320MHz,
a puncture mode operation of the dRU on 20MHz and 40MHz subblocks in a bandwidth of 80MHz or in 80MHz frequency subblocks in the wide bandwidth of 160MHz or 320MHz,
a second hybrid mode operation of the dRU and the rRU with the dRU being in the puncture mode,
a first multi-dRU operation with one of multiple dRUs on each of multiple 80MHz subblocks and with one of the multiple 80MHz subblocks being in the puncture mode, and
a second multi-dRU operation with one of the multiple dRUs on each of the multiple 80MHz subblocks and with each of the multiple 80MHz subblocks being in the puncture mode.

11. The method of any one of Claims 1 to 10, wherein the transmitting of the PPDU comprises transmitting an UL trigger-based, in the following also referred to as TB, PPDU in a 6GHz low-power indoor, in the following also referred to as LPI, system.

12. A method, comprising:
transmitting a trigger frame (2810); and
receiving a physical-layer protocol data unit, in the following also referred to as PPDU, with a distributed-tone resource unit, in the following also referred to as RU, responsive to the trigger frame signaling an indication of a RU type and that a distributed-tone RU, in the following also referred to as dRU, operation is enabled (2820).

13. The method of Claim 12, wherein the trigger frame signals that the dRU operation is enabled by using an RU allocation subfield table designed for regular resource units, in the following also referred to as rRUs, with continuous tones that are not interleaved, interlaced or distributed to indicate one or more aspects of the dRU operation.

14. The method of Claim 12 or 13, wherein the indication comprises an indication of each of:
the RU type, in particular as a rRU or a dRU,
a dRU distribution bandwidth, and
a dRU allocation comprising a dRU size and a dRU index.

15. An apparatus (2610; 2620), comprising:
a transceiver (2616; 2626) configured to communicate wirelessly; and a processor (2612; 2622) coupled to the transceiver (2616; 2626) and configured to perform operations comprising the method steps as defined in any one of the preceding claims.
